(19) Europäisches Patentamt
European Patent Office
Office européen des brevets

(11) Veröffentlichungsnummer: **0 031 508**
**B1**

# (12) EUROPÄISCHE PATENTSCHRIFT

(45) Veröffentlichungstag der Patentschrift: **09.05.84**

(51) Int. Cl.³: **C 09 B 62/515**, D 06 P 3/66, D 06 P 3/10

(21) Anmeldenummer: **80107721.5**

(22) Anmeldetag: **08.12.80**

(54) **Wasserlösliche Azoverbindungen und deren Kupferkomplexe, Verfahren zu ihrer Herstellung und ihre Verwendung als Farbstoffe.**

(30) Priorität: **19.12.79 DE 2951061**

(43) Veröffentlichungstag der Anmeldung: **08.07.81 Patentblatt 81/27**

(45) Bekanntmachung des Hinweises auf die Patenterteilung: **09.05.84 Patentblatt 84/19**

(84) Benannte Vertragsstaaten: **CH DE FR GB IT LI**

(56) Entgegenhaltungen:
**DE - A - 2 344 333**
**FR - A - 2 098 249**
**FR - A - 2 360 571**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Schläfer, Ludwig, Dr., Königsberger Strasse 40, D-6233 Kelkheim (Taunus) (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die vorliegende Erfindung betrifft das Gebiet der wasserlöslichen sauren Textilfarbstoffe, insbesondere in der Anwendung als faserreaktive Farbstoffe.

Aus den Tabellenbeispielen 26 und 27 der deutschen Offenlegungsschrift 2 344 333 sind bereits zwei Azofarbstoffe bekannt, die als Kupplungskomponente eine 2-Aminonaphthalin-disulfonsäure und als Diazokomponente das 4-β-Sulfatoäthylsulfonyl-2-methoxy-5-chlor-anilin enthalten. Diese bekannten Farbstoffe zeigen gewisse Mängel, so eine nicht zufriedenstellende Lichtechtheit ihrer kunstharz-ausgerüsteten Färbungen auf Cellulosefasern.

Desweiteren ist in der französischen Patentanmeldungs-Veröffentlichung Nr. 2 360 571 im Beispiel 8 ein Kupferkomplex-Monoazofarbstoff beschrieben, dessen Diazokomponente das 5-β-Sulfatoäthylsulfonyl-2-aminophenol und dessen Kupplungskomponente die 1-Amino-8-naphthol-4,6-disulfonsäure ist; dieser bekannte Kupferkomplexfarbstoff zeigt geringe Schweissechtheits- und Hypochloritbleichechtheits-Eigenschaften. In dieser französischen Patentanmeldungs-Veröffentlichung Nr. 2360571 ist weiterhin im Beispiel 4 eine chlorsubstituierte Diazokomponente, nämlich das 5-β-Sulfatoäthylsulfonyl-4-chlor-2-aminophenol, beschrieben. Die Synthese eines technisch wertvollen neuen Kupferkomplex-Monoazofarbstoffes mit einem zusätzlichen Chlorsubstituenten, wie er sich durch Austausch der Diazokomponente des Kupferkomplexfarbstoffes des Beispieles 8 durch die chlorsubstituierte Diazokomponente des Beispieles 4 ergeben könnte, wird jedoch hieraus nicht nahegelegt. Denn in überraschender Weise besitzt solch ein chlorsubstituierter Kupferkomplex-Monoazofarbstoff deutlich verbesserte Eigenschaften sowohl in der sauren und in der alkalischen Schweissechtheit als auch in der Hypochloritbleichechtheit.

Die vorliegende Erfindung betrifft demgemäss wertvolle wasserlösliche Kupferkomplex-Azoverbindungen von wasserlöslichen metallfreien Mono- und Disazoverbindungen der nachstehend angegebenen und definierten allgemeinen Formel (1) sowie diese metallfreien wasserlöslichen Mono- und Disazoverbindungen der allgemeinen Formel (1) selbst:

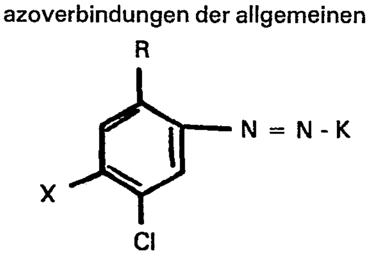 (1)

In dieser Formel (1) bedeuten:

K den Rest einer einfach oder doppelt ankuppelbaren wasserlöslichen Kupplungskomponente aus der Reihe der Aminobenzole, der Phenole, insbesondere deren Sulfonsäuren und Carbonsäuren, der Naphthole, insbesondere deren Sulfonsäuren, der Aminonaphthole, insbesondere deren Sulfonsäuren, der Acylamino-naphthole, insbesondere deren Sulfonsäuren, mit dem Acylrest einer Alkan- oder Alkencarbonsäure mit jeweils 1 bis 4 C-Atomen im Alkyl- oder Alkenylrest oder einer aromatischen Carbonsäure (wie der Benzoesäure) oder einer aromatischen Sulfonsäure (wie der Benzol- oder Toluolsulfonsäure) oder der N-substituierten Carbaminsäure (wie der N-Phenylureido-Rest), oder aus der Reihe der Dihydroxynaphthalinsulfonsäuren, der Phenylazo- und Naphthylazoaminonaphtholsulfonsäuren, der 5-Pyrazolone und 5-Aminopyrazole, der Acetoacetylarylide, der 2-Hydroxy-6-pyridone und der Hydroxychinoline;

R einen Alkoxyrest von 1 bis 4 C-Atomen, insbesondere die Methoxy- oder Äthoxygruppe;

X einen Rest der Formel (2) oder (3)

$$-SO_2-CH=CH_2 \quad (2)$$

$$-SO_2-CH_2-CH_2-Z \quad (3)$$

in welcher Z eine alkalisch eliminierbare Gruppe bedeutet.

Alkalisch eliminierbare Gruppen sind beispielsweise Halogenatome, wie das Chlor- und Bromatom, Estergruppen organischer Carbon- und Sulfonsäuren, wie ein niederer Alkanoyloxyrest, beispielsweise der Acetyloxyrest, oder der Sulfobenzoyloxy-, Benzoyloxy-, Benzolsulfonyloxy- oder Toluolsulfonyloxyrest, des weiteren beispielsweise die sauren Estergruppen der Phosphorsäure oder der Schwefelsäure entsprechend den Formeln, in Form der freien Säuren geschrieben, $-OPO_3H_2$ bzw. $-OSO_3H$, oder der Rest der Thioschwefelsäure der Formel, in Form der freien Säure geschrieben, $-S-SO_3H$, ebenso Dialkylaminogruppen mit Alkylgruppen von jeweils 1 bis 4 C-Atomen, wie die Dimethylamino- und Diäthylaminogruppe, und die Hydroxygruppe.

Es wurden weiterhin auch die den Verbindungen der allgemeinen Formel (1) entsprechenden Kupferkomplexverbindungen gefunden, von denen bevorzugt solche zu nennen sind, die den allgemeinen Formeln (4a), 4b) und (4c)

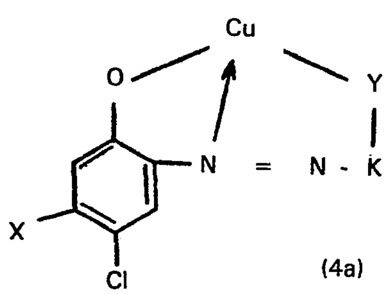

(4a)

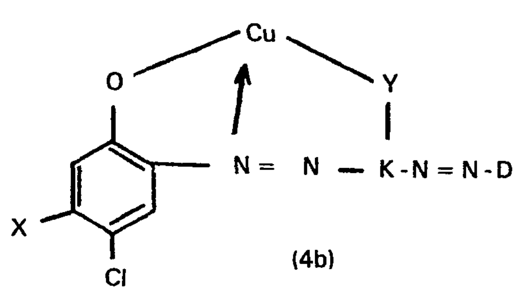

(4b)

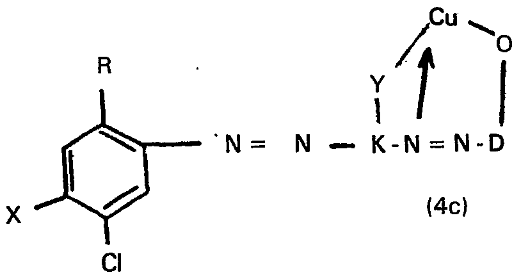

(4c)

entsprechen, in welchen X und K die obengenannten Bedeutungen haben, D den Phenyl- oder Naphthylrest bedeutet, die durch 1, 2 oder 3 Substituenten aus der Gruppe Chlor, Brom, Alkyl von 1 bis 4 C-Atomen, wie Methyl und Äthyl, Alkoxy von 1 bis 4 C-Atomen, wie Methoxy und Äthoxy, Hydroxy, Sulfo, Carboxy, Carbamoyl und Sulfamoyl, bevorzugt Chlor, Methyl, Methoxy, Sulfo und Hydroxy substituiert sein können und gegebenenfalls auch durch einen Rest entsprechend dem oben definierten Formelglied X substituiert ist, und Y als eine das Kupferatom komplex bindende Gruppe den Rest der Formel -O- oder -NH- darstellt.

Sofern K der Rest einer Kupplungskomponente aus der Naphtholreihe oder aus der Acylaminonaphtholreihe oder aus der Pyrazolonreihe ist, stellt er bevorzugt den Rest des 1-Naphthols oder 2-Naphthols dar, die durch 1, 2 oder 3 Sulfogruppen substituiert sind, bzw. den Rest des 1-Naphthols oder 2-Naphthols dar, die durch 1 oder 2 Sulfosäuregruppen und durch eine Acetylamino-, Propionylamino-, Benzoylamino-, Benzolsulfonylamino- oder Tosylamino-Gruppe substituiert sind, bzw. den Rest des 1-Phenyl-5-pyrazolons dar, der in 3-Stellung durch die Methyl-, Carbomethoxy-, Carbäthoxy- oder die Carboxygruppe substituiert ist und dessen 1ständiger Phenylrest durch 1 oder 2 Substituenten aus der Gruppe Chlor, Methyl und Sulfo substituiert sein kann.

Die erfindungsgemässen Verbindungen können sowohl in Form der freien Säure als auch in Form ihrer Salze vorliegen. Bevorzugt sind die in Form der Salze, insbesondere der Alkali- und Erdalkalimetallsalze, hiervon insbesondere die Natrium-, Kalium- und auch Calciumsalze.

Die neuen Verbindungen finden bevorzugt in Form der Alkalimetallsalze Verwendung zum Färben und Bedrucken von Fasermaterialien und von Leder.

Die vorliegende Erfindung betrifft weiterhin Verfahren zur Herstellung der Verbindungen der allgemeinen Formel (1) und deren Kupferkomplexe, insbesondere der allgemeinen Formeln (4).

Die Verbindungen der allgemeinen Formel (1) werden hergestellt, indem man ein aromatisches Amin der allgemeinen Formel (5)

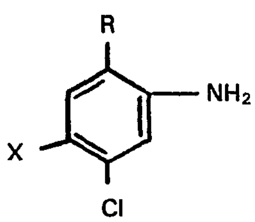

(5)

in welcher R und X die obengenannten Bedeutungen haben, in an und für sich üblicher Weise diazotiert und mit einer monovalenten oder bivalenten Kupplungskomponente der allgemeinen Formel (6) oder (6a)

H -K (6) H - K - H (6a)

in welcher K die obengenannte Bedeutung hat, ein- oder zweimal kuppelt. Ist die Kupplungskomponente eine doppelt ankuppelbare Verbindung entsprechend der obigen allgemeinen Formel (6a), so kann zur Herstellung einer Diazoverbindung zunächst die Kupplung mit dem ersten Mol der Diazoniumverbindung des Amins der allgemeinen Formel (5) oder eines anderen aromatischen Amins der Anilin- oder Naphthylaminreihe, bevorzugt eines Amins der allgemeinen Formel (7)

$$D - NH_2 \qquad (7)$$

mit D der obengenannten Bedeutung, im sauren Medium und sodann die zweite Kupplungsreaktion mit dem zweiten Mol einer Diazoniumverbindung eines Amins der allgemeinen Formel (5) oder eines Amins der Anilin- oder Naphthylamin-Reihe, bevorzugt eines Amins der allgemeinen Formel (7), jedoch zwingend mit der Diazoniumverbindung des Amins der allgemeinen Formel (5), sofern die erste Kupplungsreaktion mit der Diazoniumverbindung eines Amins der Anilin- oder Naphthylamin-Reihe, bevorzugt eines Amins der allgemeinen Formel (7), durchgeführt wurde, im schwach sauren, neutralen oder schwach alkalischen Bereich erfolgen, so beispielsweise, wenn die Kupplungskomponente der allgemeinen Formel (6a) eine Aminonaphtholverbindung ist, zuerst bei einem pH-Wert von etwa 1 bis 2,5 und anschliessend bei einem pH-Wert zwischen 4 und 6,5, und beispielsweise wenn die Kupplungskomponente der allgemeinen Formel (6a) eine Resorcinverbindung ist, zuerst bei einem pH-Wert zwischen 0,8 und 2 und sodann bei einem pH-Wert zwischen 6 und 7,5.

Sofern in der Verbindung der allgemeinen Formel (5 )der Formelrest X für die $\beta$-Hydroxyäthylsulfonyl-Gruppe steht, kann diese Hydroxygruppe der erhaltenen Azoverbindung in an und für sich üblicher und bekannter Weise mit Veresterungs- und Acylierungsmitteln in die entsprechenden Säureester- und Acyloxyverbindungen überführt werden. Solche Veresterungs- und Acylierungsmittel sind beispielsweise organische oder anorganische Säuren und deren Anhydride oder Halogenide und Amide solcher Säuren, wie beispielsweise Schwefelsäure, Phosphorsäure, Acetanhydrid, Toluolsulfochlorid, Thionylchlorid, Amidosulfonsäure, Gemische aus Phosphorsäure und Phosphorpentoxid, Phosphoroxychlorid. — Erfindungsgemässe Azoverbindungen der allgemeinen Formel (1) mit dem Rest der Formel (3), worin Z für eine Säureester- oder Acyloxygruppe steht, können in an und für sich üblicher und bekannter Weise unter Einwirkung eines Alkalis in solche erfindungsgemässen Farbstoffe übergeführt werden, in welchen X für die Vinylsulfonylgruppe des Formelrestes (2) steht. — Erfindungsgemässe Verbindungen mit dieser Vinylsulfonylgruppe können in an und für sich üblicher Weise durch Umsetzung mit einem Dialkylamin mit Alkylresten von jeweils 1 bis 4 C-Atomen in die entsprechenden erfindungsgemässen Verbindungen der allgemeinen Formel (1) mit X einem Rest der Formel (3), worin Z für die entsprechende Dialkylaminogruppe steht, oder durch Umsetzung mit einem Alkalisalz der Thioschwefelsäure, wie Natriumthiosulfat, in den erfindungsgemässen Farbstoff der allgemeinen Formel (1) mit X dem Rest der Formel (3), in welchem Z für die Thiosulfatogruppe steht, überführt werden.

Die erfindungsgemässen Kupferkomplex-Verbindungen werden mit einem kupferabgebenden Mittel durch eine entalkylierende Kupferungsreaktion aus den Verbindungen der allgemeinen Formel (1) hergestellt, sofern in K ortho-ständig zur Azogruppe eine Hydroxy- oder Aminogruppe steht. Die entalkylierende Kupferungsreaktion geschieht in an und für sich bekannter Weise, wie beispielsweise in Houben-Weyl, Methoden der org. Chemie, Band 10/3 (1965), S. 455, beschrieben.

Die erfindungsgemässen Kupferkomplex-Verbindungen können, wie oben für die Verbindungen der allgemeinen Formel (1) beschrieben, nachträglich in entsprechender Weise im Formelrest X verändert werden.

Als kupferabgebende Verbindungen kommen beispielsweise die einfachen und die komplexen Salze des Kupfers in Frage, wie beispielsweise Kupfersulfat, Kupferchlorid, Kupferacetat oder Kupfercarbonat und die Kupfersalze der Salicylsäure oder Weinsäure.

Von den erfindungsgemässen Verbindungen der allgemeinen Formel (1) können beispielsweise hervorgehoben werden solche Verbindungen, in welchen K einen Rest der nachstehenden Formel (7a), (7b), (7c), (7d), (7e), (7f), (7g), (7h), (7i), (7j) (7k), (7m), (7n), (7p), (7q) oder (7r) bedeutet:

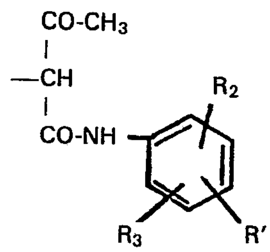

(7a)

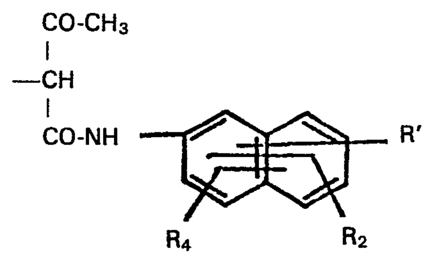

(7b)

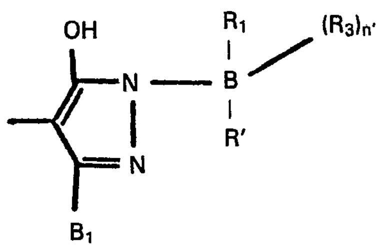

(7c)

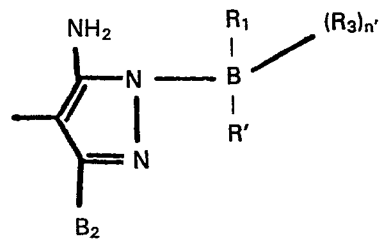

(7d)

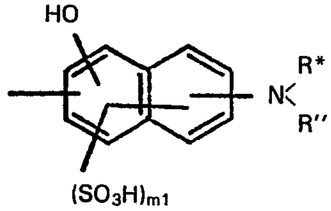

(7e)

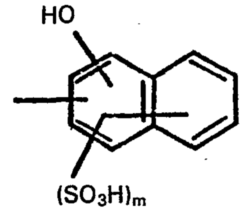

(7f)

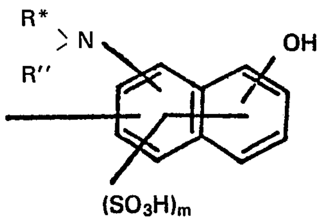

(7g)

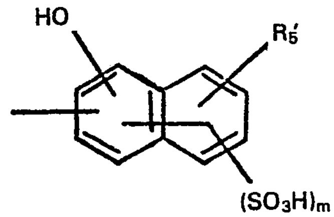

(7h)

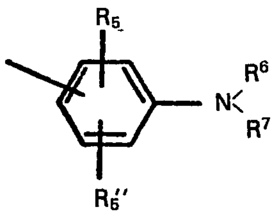

(7i)

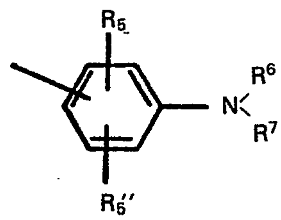

(7j)

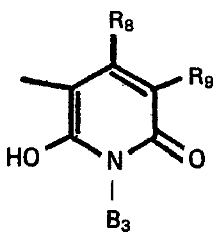

(7k)

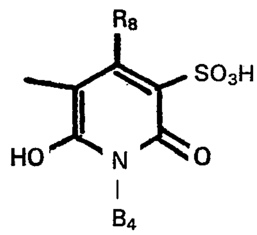

(7m)

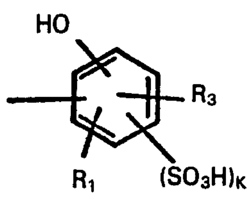

(7n)

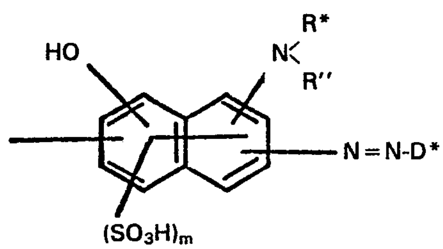

(7p)

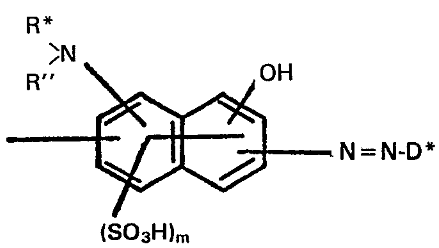

(7q)

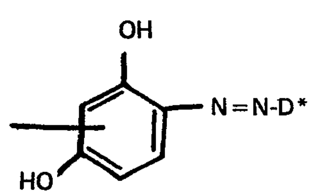

(7r)

In diesen Formeln bedeuten:

R' ist eine Carbonsäure- oder Sulfonsäuregruppe;

$R_1$ ist ein Wasserstoffatom, eine nieder Alkylgruppe, wie insbesondere eine Methyl- oder Äthylgruppe, eine niedere Alkoxygruppe, wie insbesondere eine Methoxy- oder Äthoxygruppe, ein Chlor- oder Bromatom, eine niedere Alkanoylaminogruppe, wie eine Acetylaminogruppe, oder eine Sulfonsäuregruppe;

$R_2$ ist ein Wasserstoffatom, eine niedere Alkylgruppe, wie insbesondere eine Methyl- oder Äthylgruppe, eine niedere Alkoxygruppe, wie insbesondere eine Methoxy- oder Äthoxygruppe, ein Chlor- oder Bromatom oder eine Sulfonsäuregruppe;

$R_3$ ist ein Wasserstoffatom, eine niedere Alkylgruppe, wie insbesondere die Methyl- oder Äthylgruppe, eine niedere Alkoxygruppe, wie insbesondere die Methoxy- oder Äthoxygruppe, ein Chlor- oder Bromatom;

$R_4$ ist ein Wasserstoffatom, eine niedere Alkylgruppe, wie insbesondere die Methyl- oder Äthylgruppe, eine niedere Alkoxygruppe, wie insbesondere die Methoxy- oder Äthoxygruppe, die Sulfonsäuregruppe oder Carbonsäuregruppe,

wobei R', $R_1$, $R_2$, $R_3$ und $R_4$ gleich oder verschieden voneinander sein können;

n' ist die Zahl 1 oder 2;

B ist ein Benzol- oder Naphthalinkern;

$B_1$ ist eine niedere Alkylgruppe, bevorzugt Methylgruppe, eine Carboxygruppe, eine Carbomethoxy- oder Cabäthoxygruppe oder der Phenylrest;

$B_2$ ist eine niedere Alkylgruppe, bevorzugt die Methylgruppe, eine Carbomethoxy- oder Carbäthoxygruppe, eine Carbonamidgruppe oder ein Phenylrest, der durch 1 oder 2 Substituenten aus der Gruppe niederes Alkyl, niederes Alkoxy, Chlor, Brom und Sulfo substituiert sein kann;

R* ist ein Wasserstoffatom oder ein niederer Alkylrest;

R'' ist ein Wasserstoffatom, ein niederer Alkylrest oder ein Phenylrest, der durch 1 oder 2 Substituenten aus der Gruppe niederes Alkyl, niederes Alkoxy, Chlor, Brom und Sulfo substituiert sein kann;

$R_5'$ ist die Phenylureido-, eine niedere Alkanoylamino- oder niedere Alkenoylamino-, wie Acetylamino-, Propionylamino-, Acryloylaminogruppe, oder eine Benzoylaminogruppe, die durch Chlor, Methyl, Methoxy, Nitro, Sulfo und/oder Carboxy substituiert sein kann;

$R_5$ ist ein Wasserstoffatom, eine niedere Alkylgruppe, wie eine Methyl- oder Äthylgruppe, eine niedere Alkoxygruppe, wie eine Methoxy- oder Äthoxygruppe, ein Chlor- oder Bromatom oder eine Sulfonsäuregruppe;

$R_5''$ ist ein Wasserstoffatom, eine niedere Alkylgruppe, wie Methyl- oder Äthylgruppe, oder eine niedere Alkoxygruppe, wie Methoxy- oder Äthoxygruppe, oder ein Chloratom;

$R_6$ ist ein Wasserstoffatom oder eine niedere Alkylgruppe, die durch eine Hydroxy-, Cyan-, Phenyl-, Carboxy-, Sulfo-, Sulfato-, Carbomethoxy-, Carbäthoxy- oder Acetoxygruppe substituiert sein kann;

$R_7$ ist ein Wasserstoffatom ofder eine niedere Alkylgruppe, die durch eine Hydroxy-, Cyan-, Phenyl-, Carboxy-, Sulfo-, Sulfato-, Carbomethoxy-, Carbäthoxy- oder Acetoxygruppe substituiert sein kann, oder ein Benzylrest oder ein Phenylrest, die durch niederes Alkyl, niederes Alkoxy, Chlor und/oder Sulfo substituiert sein können;

$R^6$ ist ein Wasserstoffatom oder eine niedere Alkylgruppe, die durch eine Hydroxy-, Carboxy-, Sulfo-, Sulfato-, Methoxy- oder Äthoxygruppe substituiert ist;

$R^7$ ist eine niedere Alkylgruppe, die durch eine Hydroxy-, Carboxy-, Sulfo-, Sulfato-, Methoxy- oder Äthoxygruppe substituiert ist;

$R_8$ ist ein Wasserstoffatom oder eine niedere Alkylgruppe, wie die Methyl- oder Äthylgruppe, oder eine durch niederes Alkoxy oder Cyan substituierte niedere Alkylgruppe;

$R_9$ ist eine Sulfogruppe oder eine niedere Sulfoalkylgruppe, wie Sulfomethylengruppe,

wobei R*, R'', $R_1$, $R_5$, $R_5'$, $R_5''$, $R_6$, $R_7$, $R^6$, $R^7$, $R_8$ und $R_9$ gleich oder verschieden voneinander sein können;

$B_3$ ist ein Wasserstoffatom oder eine niedere Alkylgruppe, wie eine Methyl- oder Äthylgruppe, die durch Phenyl oder Sulfophenyl substituiert sein kann;

$B_4$ ist ein Wasserstoffatom, eine niedere Alkylgruppe, eine durch niederes Alkoxy, wie Methoxy, oder eine Cyangruppe substituierte niedere Alkylgruppe, eine niedere Alkenylgruppe, eine Cyclohexylgruppe, die Phenylgruppe oder ein durch Substituenten aus der Gruppe Carboxy, Sulfo, Benzoylamino, Acetylamino oder Chlor substituierter Phenylrest oder eine Aminogruppe, die durch Phenyl, niederes Alkyl, Acetyl, Benzoyl, Hydroxy oder Methoxy substituiert ist;

D* ist der oben definierte Formelrest D oder ein Rest der Formel

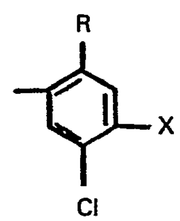

mit R und X der obengenannten Bedeutung;

k ist die Zahl Null oder 1;

m steht für die Zahl 1 oder 2;

$m_1$ steht für die Zahl 1, 2 oder 3.

Die Angaben «niedere» bedeutet hier wie im folgenden, dass der in der Gruppe enthaltene Alkyl- oder Alkylenrest oder Alkenylrest bevorzugt aus 1 bis 4 C-Atomen besteht.

Die in den obigen Formeln (7e), (7f), (7g), (7h), (7i), (7j) und (7n) befindliche freie Bindung, welche zur Azogruppe führt, bzw. die Azogruppe in Formel (7p) und (7q) befindet sich in ortho-Stellung zur Hydroxy- bzw. Aminogruppe.

Von den erfindungsgemässen Kupferkomplex-Azoverbindungen der allgemeinen Formel (4) können beispielsweise diejenigen hervorgehoben werden, in welchen der Formelrest K und der daran gebundene Rest Y einen Rest der nachstehend genannten allgemeinen Formeln (8a), (8b), (8c), (8d), (8e), (8f) oder (8g) bedeutet:

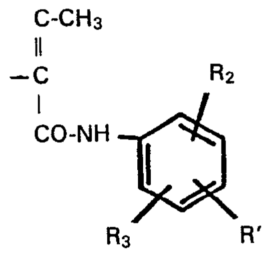

(8a)

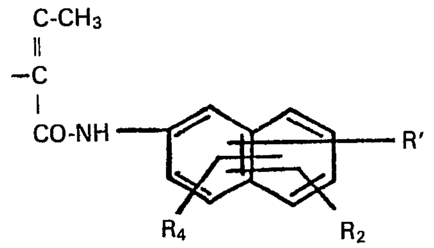

(8b)

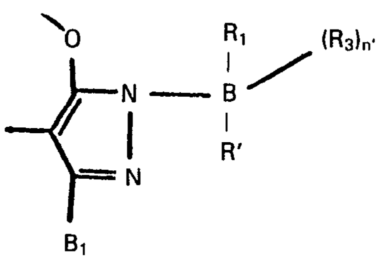

(8c)

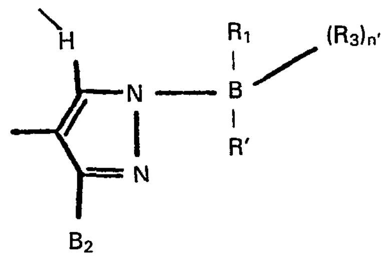

(8d)

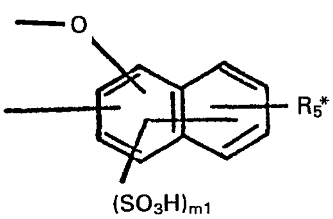

(8e)

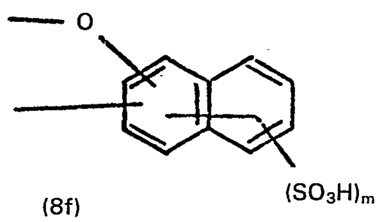

(8f)

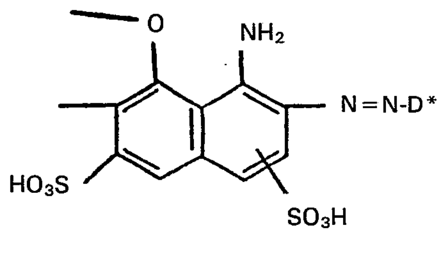

(8g)

In diesen Formeln haben R′, $R_1$, $R_2$, $R_3$, $R_4$, B, $B_1$, $B_2$, D*, n′, m und $m_1$ die anfangs angegebenen Bedeutungen, wobei jeweils die komplexbildenden Sauerstoffatome bzw. Aminogruppen ortho-ständig zu den Azogruppen gebunden sind, und $R_5$* bedeutet ein Wasserstoffatom oder hat die obige Bedeutung von $R_5'$.

Kupplungskomponenten der allgemeinen Formel (6) und (6a), die zur Herstellung der erfindungsgemässen Farbstoffe der allgemeinen Formel (1) eingesetzt werden können, sind insbesondere beispielsweise die Verbindungen der allgemeinen Formeln (9a), (9b), (9c), (9d), (9e), (9f), (9h), (9i), (9j), (9k), (9m), (9n), (9p) und (9q):

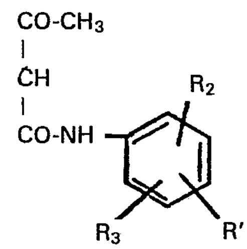

(9a)

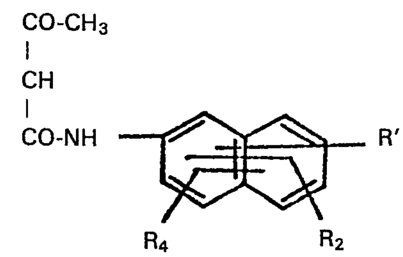

(9b)

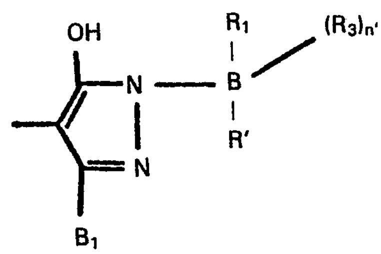

(9c)

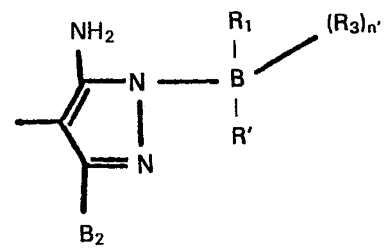

(9d)

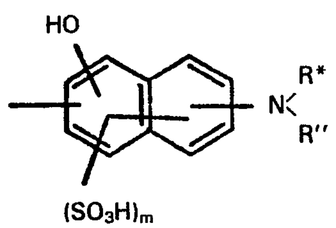

(9e)

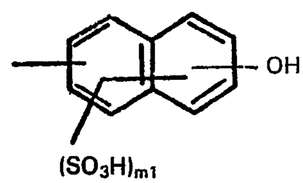

(9f)

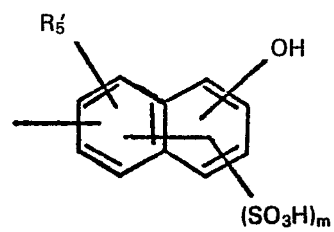

(9h)

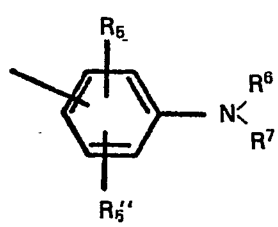

(9i)

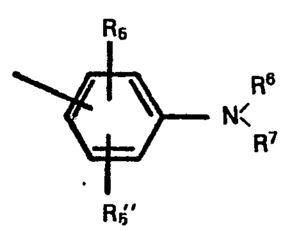

(9j)

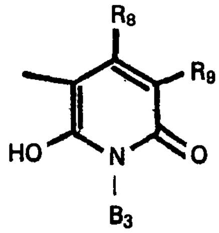

(9k)

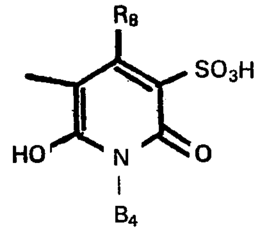

(9m)

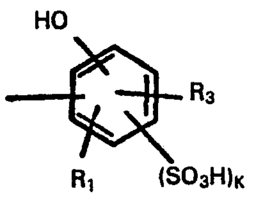

(9n)

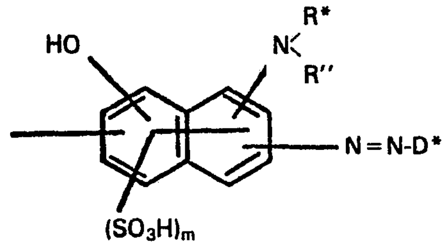

(9p)

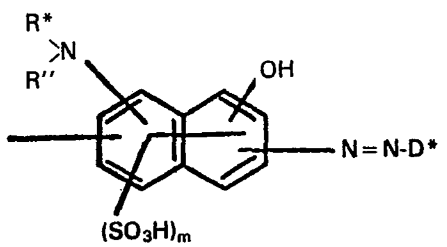

(9q)

in welchen D*, R', $R_1$, $R_2$, $R_3$, $R_4$, $R_5$, $R_6$, $R_7$, $R^6$, $R^7$, $R_8$, $R_9$, R'', $R_5'$, $R_5''$, R*, k, m, $m_1$, n', B, $B_1$, $B_2$, $B_3$ und $B_4$ die obengenannten Bedeutungen haben.

Kupplungskomponenten der allgemeinen Formel (6) und (6a), die eine zur Kupferkomplexbildung befähigte Hydroxy- oder Aminogruppe enthalten und zur Herstellung der erfindungsgemässen Kupferkomplexverbindungen eingesetzt werden können, sind insbesondere beispielsweise die obengenannten Verbindungen der allgemeinen Formeln (9a), (9b), (9c), (9d), (9e), (9f), (9h), (9p) und (9q).

Kupplungskomponenten der allgemeinen Formel (6) und (6a), die zur Herstellung der erfindungsgemässen Farbstoffe verwendet werden können und beispielweise den allgemeinen Formeln (7a) bis (7q) entsprechen, sind beispielsweise: 1,3-Diaminobenzol-5-sulfonsäure, Phenol, Kresol, Resorcin, 2-Äthoxy-phenol, 4-Methylphenol, 3-Sulfophenol, Salicylsäure, 3-Sulfonaphthol, 4-Sulfonaphthol, 5-Sulfonaphthol, 3,6-Disulfonaphthol(8), 4,6-Disulfo-naphthol(8), 1-Naphthol-3,8-disulfonsäure, 1-Aminonaphthol(8)-4-sulfonsäure, 1-Aminonaphthol(8)-5-sulfonsäure, 1-Amino-8-naphthol-2,4-disulfonsäure, 2-Amino-5-naphthol-7-sulfonsäure, 2-Amino-5-naphthol-1,7-disulfonsäure, 1-Amino-5-naphthol-7-sulfonsäure, 2-Amino-naphthol(8)-6-sulfonsäure, 2-Amino-8-naphthol-3,6-disulfonsäure, 2-Amino-8-naphthol-4,6-disulfonsäure, 1-Amino-8-naphthol-3,6- oder -4,6-disulfonsäure, 1-Acryloylamino-8-naphthol-3,6- oder -4,6-disulfonsäure, 1-Propionylamino-8-naphthol-3,6-disulfonsäure, 1-Acetylamino-8-naphthol-4-sulfonsäure, 1-Acetylamino-8-naphthol-3,6- oder -4,6-disulfonsäure, 1-Benzoylamino-8-naphthol-3,6- oder -4,6-disulfonsäure, 2-Naphthol-5,7-disulfonsäure, 2-Naphthol-3,6- und -6,8-disulfonsäure, 1,8-Dihydroxynaphthalin-3,6-disulfonsäure, 1,8-Dihydroxynaphthalin-6-sulfonsäure, 1-Naphthol-3,6,8-trisulfonsäure, 2-Acetylamino-5-naphthol-7-sulfonsäure, 2-Benzoylamino-8-naphthol-6-sulfonsäure, 2-(p'-Tosylamino)-5-naphthol-7-sulfonsäure, 2-Acetylamino-8-naphthol-3,6-disulfonsäure, 2-Acetylamino-5-naphthol-1,7-disulfonsäure, 2-Benzoylamino-8-naphthol-6-sulfonsäure, 2-Phenylsulfonylamino-5-naphthol-7-sulfonsäure, 2-(N-Methyl-N-acetyl)-amino-8-naphthol-6-sulfonsäure, N-Äthyl-N-benzyl-anilin-3-sulfonsäure, N,N-Bis-(β-hydroxyäthyl)-anilin, N,N-Bis-(β-sulfatoäthyl)-anilin, N,N-Bis-(β-hydroxyäthyl)-2-methoxy-5-chlor-anilin, N-(β-Sulfatoäthyl)-2,5-dimethoxyanilin, N-(β-Sulfatoäthyl)-2-chloranilin, Acetoacetyl-2-naphthylamid-5-sulfonsäure, N-Acetoacetylanilin-3- oder -4-sulfonsäure, N-Acetoacetyl-2-methoxy-5-sulfo-anilin, N-Acetoacetyl-4-methoxy-3-sulfo-anilin, N-Aceto-

acetyl-2-methoxy-5-methyl-4-sulfo-anilin, N-Acetoacetyl-2,5-dimethoxy-4-sulfo-anilin, 1-(4'-Sulfophenyl)-3-methyl-pyrazolon(5), 1-(4'-Sulfophenyl)-3-carboxy-pyrazolon(5), 1-(2'-Chlor-5'-sulfo-phenyl)-3-methyl- oder -3-carboxy-pyrazolon(5), 1-(3'-Sulfophenyl)-3-carboxy-pyrazolon(5), 1-(2'-Methoxy-4'-sulfophenyl)-3-carboxy-pyrazolon(5), 1-(3'-Sulfophenyl)-3-methyl-5-amino-pyrazol, 1-(4'-Sulfo-phenyl)-3-methyl-5-amino-pyrazol, 1-(2'-Methoxy-5'-sulfophenyl)-3-methyl-5-aminopyrazol, 1-(2'-Methoxy-5'-methyl-4'-sulfophenyl)-3-methyl-5-aminopyrazol, 1-(2'-Chlor-5'-sulfo-phenyl)-3-methyl-5-aminopyrazol, 1-(3'-Amino-4'-sulfo-phenyl)-3-carbäthoxy-pyrazolon(5), 1-(2',4',6'-Trimethyl-3'-amino-5'-sulfophenyl)-3-carbäthoxy-pyrazolon-(5), 1-(3'-Amino-6'-methyl-phenyl)-3-carboxy-pyrazolon-(5), 2-N-Methylamino-8-naphthol-6-sulfonsäure, 3-Carboxy-pyrazolon(5), 1-Phenyl-3-carboxy-pyrazolon(5)-1-(4'-Nitrophenyl)-3-carboxy-pyrazolon(5), 1-(3'-Acetylaminophenyl)-3-carboxy-pyrazolon(5), 1-(3'-Carboxyphenyl)-3-methyl-pyrazolon(5), 2,3-Hydroxynaphthoesäure, 8-Hydroxychinolin-5-sulfonsäure, 1,4-Dimethyl-2-hydroxy-6-pyridon-5-sulfonsäure, Anilin-N-methan-sulfonsäure, 2-Amino-5-naphthol-7-sulfonsäure, 2-Methylamino-8-naphthol-6-sulfonsäure, Diphenylamino-2,5-disulfonsäure, Diphenylamino-4'-sulfonsäure.

Von den erfindungsgemässen Verbindungen der allgemeinen Formel (1) können als bevorzugt diejenigen Verbindungen genannt werden, in denen der Formelrest K die folgende Bedeutung hat:

K als Rest einer wasserlöslichen Kupplungskomponente den 1-oder 2-Naphtholrest darstellt, der durch 1, 2 oder 3 Sulfonsäuregruppen substituiert ist und noch durch eine Amino-, Methylamino-, Phenylamino-, Acetylamino-, Benzoylamino- oder N-Methyl-N-acetylamino-Gruppe substituiert sein kann, oder

K als Rest einer wasserlöslichen Kupplungskomponente den 5-Aminopyrazol- oder 5-Pyrazolon-Rest bedeutet, die in 3-Stellung durch Methyl, Carboxy, Carbamoyl, niederes Carbalkoxy, wie Carbomethoxy und Carbäthoxy, oder Phenyl substituiert sind und in 1-Stellung den Phenylkern oder Naphthylkern gebunden enthalten, wobei der Phenylrest durch 1 oder 2 Sulfonsäuregruppen und/oder 1 oder 2 Substituenten aus der Gruppe niederes Alkyl, niederes Alkoxy, Chlor, Brom, Nitro, Acetylamino und Carboxy und der Naphthylkern durch 1, 2 oder 3 Sulfogruppen und/oder einen Substituenten aus der Gruppe niederes Alkyl, niederes Alkoxy, Nitro, Acetylamino und Carboxy substituiert sein können, oder

K als Rest einer wasserlöslichen Kupplungskomponente für den Acetoacetylanilid- oder -naphthylamid-Rest steht, wobei der Phenylrest oder der Naphthylrest durch eine oder zwei Sulfonsäure- und/oder Carbonsäuregruppen substituiert sind und noch durch 1 oder 2 Substituenten substiuiert sein können, die der Gruppe niederes Alkyl, wie Methyl und Äthyl, niederes Alkoxy, wie Methoxy und Äthoxy, Carboxy, Acetylamino, Benzoylamino, Carbamoyl, durch niederes Alkyl und/oder Phenyl mono- oder disubstituiertes Carbamoyl, Sulfamoyl, durch niederes Alkyl und/oder Phenyl mono- oder disubstituiertes Sulfamoyl, Cyan, Nitro, Chlor, Brom, Trifluormethyl und Sulfo angehören, oder

K als Rest einer wasserlöslichen Kupplungskomponente für den Anilinrest steht, der im Benzolkern durch 1 oder 2 Substituenten aus der Gruppe niederes Alkyl, niederes Alkoxy, Sulfo und Chlor substituiert sein kann und der am Stickstoffatom des Anilins durch niederes Alkyl mono- oder disubstituiert ist, wobei diese niederen Alkylgruppen durch eine Carboxy-, Sulfo-, Hydroxy- oder Sulfatogruppe substituiert sind,

wobei die Azogruppe an K ortho-ständig zu der die Kupplung dirigierenden Hydroxygruppe bzw. ortho- oder para-ständig zu der die Kupplung dirigierenden Aminogruppe steht.

Von den erfindungsgemässen Kupferkomplexverbindungen der allgemeinen Formeln (4) können als bevorzugt beispielsweise diejenigen Verbindungen genannt werden, in denen Y für ein Sauerstoffatom steht und K die folgende Bedeutung hat:

K ist der Naphthylenrest, der durch 1, 2 oder 3 Sulfonsäuregruppen substituiert ist und durch eine Amino-, Methylamino-, Phenylamino-, Acetylamino-, Benzoylamino- oder N-Methyl-N-acetylamino-Gruppe substituiert sein kann, oder

K ist der Rest des Pyrazol-4,5-ylens, der in 3-Stellung durch Methyl. Carboxy, Carbamoyl, niederes Carbalkoxy, wie Carbomethoxy und Carbäthoxy, oder Phenyl substituiert ist und in 1-Stellung den Phenylkern oder Naphthylkern gebunden enthalten, wobei der Phenylrest durch 1 oder 2 Sulfonsäuregruppen und/oder Carbonsäuregruppen substituiert ist und noch durch 1 oder 2 Substituenten aus der Gruppe niederes Alkyl, niederes Alkoxy, Chlor, Brom, Nitro und Acetylamino substituiert sein kann oder der Naphthylkern durch 1, 2 oder 3 Sulfogruppen und/oder Carbonsäuregruppen substituiert ist und noch durch einen Substituenten aus der Gruppe niederes Alkyl, niederes Alkoxy, Nitro und Acetylamino substituiert sein kann, oder

K ist der Kupplungsrest des Acetoacetylanilids oder -naphthylamids, wobei der Phenyl- oder Naphthylrest durch 1, 2 oder 3 Sulfonsäure- und/oder Carbonsäuregruppen substituiert ist und noch durch 1 oder 2 Substituenten substituiert sein kann, die der Gruppe niederes Alkyl, wie Methyl und Äthyl, niederes Alkoxy, wie Methoxy und Äthoxy, Carboxy, Acetylamino, Benzoylamino, Carbamoyl, durch niederes Alkyl und/oder Phenyl mono- oder disubstituiertes Carbamoyl, Sulfamoyl, durch niederes Alkyl und/oder Phenyl mono- oder disubstituiertes Sulfamoyl, Cyan, Nitro, Chlor, Brom und Trifluormethyl angehören.

Die erfindungsgemässen Verbindungen lassen sich aus ihren Syntheselösungen nach allgemein bekannen Methoden für wasserlösliche Verbindungen isolieren, so beispielsweise durch Ausfällen aus dem Reaktionsmedium mittels eines Elektrolyten, wie beispielsweise Natriumchlorid oder Kaliumchlorid, oder aber durch Eindampfen der Reaktionslösung selbst, beispielsweise durch Sprühtrocknung. Falls

die letztgenannte Art der Isolierung der erfindungsgemässen Verbindungen gewählt wird, empfiehlt es sich vielfach, vor dem Eindampfen eventuell in den Lösungen vorhandene Sulfatmengen durch Fällung als Calciumsulfat und Abtrennung durch Filtration zu entfernen. In manchen Fällen kann die wässrige Lösung der erfindungsgemässen Verbindung, gegebenenfalls nach Zusatz einer Puffersubstanz, auch direkt als Flüssigpräparation der Verwendung, beispielsweise zum Färben oder Bedrucken eines Fasermaterials, zugeführt werden.

Die erfindungsgemässen metallfreien und Kupferkomplex-Verbindungen besitzen wertvolle Farbstoffeigenschaften.

Sie eignen sich deshalb als wasserlösliche Farbstoffe zum Färben von Leder oder Materialien aus natürlichen, regenerierten oder synthetischen stickstoffhaltigen Fasern oder aus natürlichen, regenerierten oder synthetischen hydroxygruppenhaltigen Fasern. Der faserreaktive Rest in den erfindungsgemässen Verbindungen besitzt die Eigenschaft, mit NH- und OH-Gruppe — mit den Hydroxygruppen vorzugsweise im alkalischen Bereich — eine kovalente Bindung einzugehen und somit eine echte Bindung mit der Faser zu erzeugen.

Die vorliegende Erfindung betrifft somit ebenfalls die Verwendung der erfindungsgemässen Verbindungen zum Färben (einschliesslich Bedrucken) von Materialien aus natürlichen, regenerierten oder synthetischen stickstoffhaltigen Fasern oder von natürlichen, regenerierten oder synthetischen hydroxygruppenhaltigen Fasern oder von Leder bzw. ein Verfahren zum Färben (einschliesslich Bedrucken) von solchen Materialien (Substraten), bei welchem man eine erfindungsgemässe Verbindung, vorzugsweise aus wässriger Lösung, auf das Substrat appliziert und sie, gegebenenfalls unter der Einwirkung eines Alkalis und von Wärme, auf dem Substrat fixiert.

Stickstoffhaltige Fasermaterialien sind z.B. Fasern aus synthetischen Polyurethanen oder Polyamiden, wie Polyamid-6.6, Polyamid-6, Polyamid-11 und Polyamid-4, natürliche Fasermaterialien aus Polyamiden sind Seide und Wolle und andere Tierhaare.

Hydroxygruppenhaltige Fasermaterialien sind insbesondere Cellulosefasermaterialien, vorzugsweise Baumwolle und andere Pflanzenfasern, wie Leinen, Hanf, Jute, des weiteren die entsprechenden Fasern aus regenerierter Cellulose, wie beispielsweise Viskose oder Kupferseide.

Die erfindungsgemässen Verbindungen lassen sich auf den genannten Substraten nach den für faserreaktive Farbstoffe allgemein bekannten Anwendungstechniken applizieren. So geht man allgemein in der Weise vor, das man die erfindungsgemässen Verbindungen in wässriger Lösung, gegebenenfalls in Anwesenheit eines üblichen Verdickungsmittels und/oder gegebenenfalls anderer Hilfsmittel, die beispielsweise das Aufziehvermögen, das Egalisiervermögen und Migriervermögen verbessern können, auf das Substrat aufbringt, wobei die wässrige Lösung der erfindungsgemässen Verbindung schwach sauer, neutral oder alkalisch eingestellt sein kann.

Auf natürlichen, regenerierten oder synthetischen Polyamidfasern oder Polyurethanfasern oder auf Leder werden die erfindungsgemässen Verbindungen in üblicher Weise aus einer wässrig schwach sauren bis wässrig neutralen Lösung (pH-Bereich etwa zwischen 3 und 6,5), vorzugsweise gemäss den Methoden des Ausziehverfahrens, auf die Faser aufgebracht und dort in der Wärme, insbesondere bei einer Temperatur zwischen 60 und 130°C, fixiert.

So kann man beispielsweise dem die erfindungsgemässe Verbindung enthaltenden Bad Essigsäure oder Essigsäure und Ammoniumacetat als Puffer zufügen, um den gewünschten pH-Wert zu erhalten. Zwecks Erreichung einer brauchbaren Egalität der Färbungen empfiehlt sich ein Zusatz an üblichen Egalisiermitteln, beispielsweise auf Basis eines Umsetzungsproduktes von Cyanurchlorid mit der dreifach molaren Menge einer Aminobenzolsulfonsäure und/oder einer Aminonaphthalinsulfonsäure und/oder auf Basis eines Umsetzungsproduktes von Stearylamin mit Äthylenoxid. Die Applikation und Fixierung der erfindungsgemässen Verbindung auf dem Substrat kann gemäss dem Ausziehverfahren sowohl bei Siedetemperatur als auch bei einer höheren Temperatur, wie beispielsweise bei 105 bis 120°C, unter Druck ausgeführt werden, wobei man die Färbung zweckmässig unter langsamer Temperatursteigerung auf 60°C, nach einiger Zeit unter langsamer Temperatursteigerung auf höhere Temperatur, beginnt.

Beim Färben von hydroxygruppenhaltigen Fasermaterialien wird die erfindungsgemässe Verbindung in der Regel aus neutraler bis alkalischer Lösung auf die Faser aufgebracht und auf ihr in Gegenwart eines alkalischen Mittels, das erforderlichenfalls nachträglich der wässrigen Lösung zugesetzt oder auf die Faser aufgebracht wird, fixiert.

Man erhält auf diese Weise gefärbte (bzw. bedruckte) Fasermaterialien, die gute Nassechtheitseigenschaften besitzen.

Im Einzelnen kann man gemäss üblichen Methoden der Aufbringung von faserreaktiven Farbstoffen und deren Fixierung auf der Faser, die zahlreich in der Literatur beschrieben sind, vorgehen, beispielsweise folgendermassen:

Zum Färben von hydroxygruppenhaltigen Fasermaterialien, wie beispielsweise Cellulose, wird das Material mit einer Lösung der erfindungsgemässen Verbindung geklotzt und eventuell nach Zwischentrocknen des geklotzten Materials mit einer alkalischen Lösung überklotzt oder durch ein alkalisches Bad geführt; diese alkalischen Lösungen können Raumtemperatur oder höhere Temperatur besitzen, beispielsweise eine Temperatur zwischen 15 und 80°C.

Alkalisch reagierende Stoffe, die in diesen Fixierlösungen verwendet werden können, sind beispielsweise Natriumhydroxid, Natriumcarbonat, Natriumhydrogencarbonat, Kaliumhydroxid, Kaliumcarbonat, Dinatriumhydrogenphosphat, Trinatriumphosphat oder Natrium- oder Kaliumsilikat (Wasserglas). Die so alkalisch behandelte Ware wird anschliessend entweder bei einer Temperatur zwischen 20 und 50°C abgelegt (beispielsweise abgetafelt oder auf eine Decke gewickelt) und dort mehrere Stunden lang zur Fixierung der erfindungsgemässen Verbindung verweilen lassen, oder anschliessend zur Fixierung der erfindungsgemässen Verbindung der Einwirkung von feuchter oder trockener Hitze (so beispielsweise

mittels Heissdampf, Heissluft oder Infrarotstrahlung) ausgesetzt. Im Falle der thermischen Fixierung können als Alkalien auch Verbindungen eingesetzt werden, die erst in der Wärme ihre alkalische Wirkung erzielen, wie beispielsweise Natriumacetat, Natriumformiat und Natriumtrichloracetat.

Die alkalischen Mittel können aber auch bereits der wässrigen Farbstofflösung zugegeben werden. In diesem Falle behandelt man das Fasermaterial in der wässrig-alkalischen Lösung, die die erfindungsgemässe Verbindung enthält, vorteilhaft unter Zusatz eines Elektrolyts, wie Natriumchlorid oder Natriumsulfat, bei höheren Temperaturen, wie beispielsweise bei einer Temperatur zwischen 30 und 110°C, wobei man vorteilhaft unter langsamer Temperatursteigerung des Ausziehbades auf 60°C mit der Behandlung der Faser beginnt und die Fixierung anschliessend bei Temperaturen bis zu 110°C weiterführt und beendet. Ebenfalls ist es möglich, die Faser, wie z.B. die Cellulosefaser, mit einer Lösung einer alkalisch reagierenden Verbindung vorzubehandeln, sodann, gegebenenfalls nach Zwischentrocknung, mit der wässrigen Lösung der erfindungsgemässen Verbindung zu imprägnieren und anschliessend bei Raumtemperatur, vorzugsweise aber unter Wärmebehandlung, die faserreaktive Verbindung darauf zu fixieren.

Bringt man die erfindungsgemässen Verbindungen in Form von Druckpasten auf das Fasermaterial, so verwendet man üblicherweise Verdickungsmittel, wie Natriumalginat, Johannisbrotkernmehläther, Celluloseäther, Traganth oder Gummi Arabicum, gegebenenfalls unter Zusatz eines üblichen Druckhilfsmittels und der obengenannten alkalisch reagierenden Verbindungen. Diese Drucke werden dann bei einer Temperatur zwischen 70 und 230°C, vorzugsweise zwischen 100 und 150°C, mit Heissluft behandelt (thermofixiert) oder gedämpft. So können die erfindungsgemässen Verbindungen nach den üblichen Druckverfahren einphasig in Anwesenheit von Natriumbicarbonat oder eines anderen der obengenannten alkalischen Mittel mittels der Druckpaste auf die Cellulosefaser aufgebracht und anschliessend die erfindungsgemässe Verbindung durch Dämpfen bei 101 bis 103°C fixiert werden, oder aber nach einem zweiphasigen Verfahren zuerst mit neutraler oder schwach saurer Druckpaste auf die Faser gebracht werden, worauf sie dann entweder durch Hindurchführen des bedruckten Materials durch ein heisses elektrolythaltiges alkalisches Bad oder aber durch Überklotzen mit einer alkalischen elektrolythaltigen Flotte und anschliessendem Verweilenlassen oder einer Hitzebehandlung auf der Faser fixiert werden. Verwendet man ein elektrolythaltiges alkalisches Bad, durch das das mit der erfindungsgemässen Verbindung imprägnierte Material zur Fixierung hindurchgeführt wird, so wendet man eine Temperatur von 60 bis 105°C für das Bad an, so dass eine anschliessende Behandlung durch Heissluft oder Dampf entfallen kann. Behandelt man das mit der erfindungsgemässen Verbindung imprägnierte Material mit einem starken wässrigen Alkali, wie z.B. Natrium- oder Kaliumhydroxyd oder Natrium- oder Kaliumsilikat oder Trinatriumphosphat, so genügt zur Fixierung der erfindungsgemässen Verbindungen ein längeres Verweilenlassen der feuchten, alkalisch imprägnierten Ware, vorzugsweise der Drucke, bei Raumtemperatur.

Die so erhaltenen gefärbten Materialien werden anschliessend in üblicher Weise nachbehandelt, gespült und getrocknet. Die auf diese Weise mit den erfindungsgemässen Verbindungen erhaltenen Färbungen bzw. Drucke zeigen vorzügliche Nassechtheiten; von diesen sind insbesondere beispielsweise die Sodakochechtheit, die Waschechtheit bei 60 und 95°C, die Peroxydwaschechtheit, wie beispielsweise bei 95°C, die alkalische und saure Schweissechtheit, die Wasserechtheit (schwer), die Chlorbleichechtheit und Chlorwasserechtheit zu nennen. Insbesondere die Lichtechtheit der mit den Kupferkomplexverbindungen der allgemeinen Formel (4) hergestellten Färbungen ist in trockenem und feuchtem Zustand des Substrates bemerkenswert gut. Die gute Lichtechtheit wird auch bei Kunstharzausrüstung der Färbungen auf Cellulosefasern beibehalten; eine Abtrübung der Nuance zeigt sich nicht. Die mit den erfindungsgemässen Farbstoffen erhaltenen Drucke zeigen darüberhinaus eine hohe Konturenschärfe und eine sehr hohe Reinheit des Weissfonds. Die erfindungsgemässen metallfreien und Kupferkomplex-Verbindungen besitzen allgemein ein sehr gutes Aufzieh- und Aufbauvermögen und einen hohen Fixiergrad. Sie fixieren auf den unterschiedlichen Fasermaterialien eines Baumwolle/Zellwolle-Mischgewebes in gleicher Intensität; so zeigen sie auf diesen Fasermaterialien gleiche Nuance und Farbstärke.

Die nachfolgenden Beispiele dienen zur Erläuterung der Erfindung. Die dort angegebenen Teile sind Gewichtsteile, die Angaben in Prozent beziehen sich auf Gewichtsprozent, sofern nicht anderes vermerkt. Volumenteile verhalten sich zu Gewichtsteilen wie Liter zu Kilogramm.

*Beispiel 1*

Eine neutrale Lösung von 34,6 Teilen 2-Methoxy-5-chlor-4-(β-sulfatoäthylsulfonyl)-anilin in 200 Teilen Wasser wird mit 7 Teilen Natriumnitrit versetzt; diese Lösung wird unter gutem Rühren in ein Gemisch von 35 Teilen konzentrierter Salzsäure und 100 Teilen Eis eingegossen. Man rührt noch 30 Minuten nach und entfernt sodann das überschüssige Nitrit mit Amidosulfonsäure. In diese Suspension des Diazoniumsalzes trägt man 36,1 Teile 1-Acetylamino-8-naphthol-3,6-disulfonsäure ein und stellt den pH-Wert des Kupplungsgemisches im Verlaufe von etwa 1 Stunde allmählich auf 6. Man rührt bis zur Beendigung der Kupplung nach, fällt die gebildete Azoverbindung mit Kaliumchlorid aus und isoliert sie durch Absaugen oder Eindampfen (beispielsweise Sprühtrocknung) der Lösung, nachdem die Lösung gegebenenfalls zuvor geklärt wurde. Man erhält ein blaurotes Pulver, das neben Elektrolyt (vorwiegend Kaliumchlorid) das Alkalimetallsalz, vorwiegend Kaliumsalz, der Verbindung der Formel

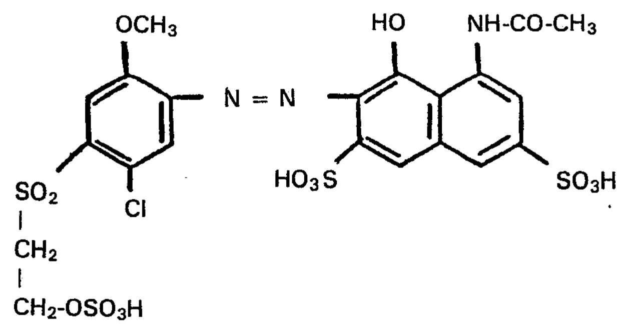

enthält. Diese Verbindung eignet sich ausgezeichnet als Farbstoff zum Färben von Cellulosefasern und nativen und synthetischen Polyamidfasern, wie Baumwolle, Zellwolle, Leinen, Wolle, Polyamid-6 und Polyamid-6,6. Insbesondere auf Cellulosefasermaterialien liefert sie nach den für Reaktivfarbstoffe üblichen Verfahrensweisen der Applikation und Fixierung farbtiefe Drucke und Färbungen von weinroter Nuance und sehr guten Nassechtheiten, wie eine sehr gute Waschechtheit bei Temperaturen zwischen 40 und 95°C, Peroxidwaschechtheit,Wasserechtheit (schwer), alkalische und saure Schweissechtheit und Chlorbadewasserechtheit, ebenso eine gute Abgasechtheit und gute Lichtechtheiten auf trocknem und feuchtem Fasermaterial. Eine Kunstharzausrüstung des gefärbten Fasermaterials beeinflusst weder die Nuance noch die Lichtechtheit der Färbung. Die mit dem erfindungsgemässen Farbstoff erhältlichen Drucke zeigen hohe Konturenschärfe und einen reinen Weissfond. Der Farbstoff zeigt ein sehr gutes Aufbauvermögen.

*Beispiel 2*

71,8 Teile der Azoverbindung des Beispieles 1 werden in 600 Teilen Wasser gelöst; zu dieser Lösung werden 40 Teile kistallisiertes Natriumacetat, 27 Teile Eisessig und 35 Teile wasserhaltiges Kupfer(II)-sulfat hinzugegeben. Man erhitzt dieses Reaktionsgemisch zum Sieden und hält es unter Rühren bei dieser Temperatur 2 bis 5 Stunden lang unter Einhaltung eines pH-Wertes zwischen 3,5 und 4,5. Anschliessend wird das Reaktionsgemisch geklärt (beispielsweise durch Filtrieren, gegebenenfalls nach Zugabe von etwas Kieselgur oder Aktivkohle) und die erhaltene Kupferkomplex-Azoverbindung durch Eindampfen, Sprühtrocknen oder durch Aussalzen isoliert. Man erhält ein schwarz-blaues elektrolythaltiges Pulver, das das Alkalimetallsalz der Verbindung der Formel

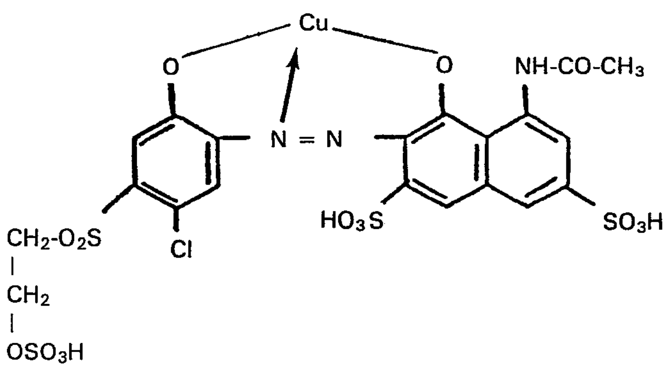

enthält. Diese Kupferkomplexverbindung eignet sich ausgezeichnet als Farbstoff zum Färben von Cellulosefasermaterialien, von nativen und synthetischen Polyamidfasermaterialien, wie Baumwolle, Zellwolle, Leinen, Wolle und Polyamid-6, und liefert auf diesen Fasermaterialien, insbesondere auf den Cellulosefasermaterialien, nach den für Reaktivfarbstoffe üblichen Verfahrensweisen violette Färbungen oder Drucke mit sehr guten Waschechtheiten bei 40 - 95°C, sehr guter Peroxydwaschechtheit, Wasserechtheit (schwer), alkalischer und saurer Schweissechtheit, Chlorbadewasserechtheit und Abgasechtheit. Das Ziehvermögen dieses Kupferkomplexfarbstoffes und sein Farbaufbau sowie die Lichtechtheiten seiner Färbungen auf trockenem und feuchtem Fasermaterial sind hervorragend.

*Beispiel 3*

Zu einer neutralen Lösung aus 34,6 Teilen 2-Methoxy-5-chlor-4-(β-sulfatoäthylsulfonyl)-anilin in 200 Teilen Wasser gibt man 100 Teile Eis und 30 Teile konzentrierte Salzsäure und diazotiert mit 14 Teilen einer 40%igen wässrigen Lösung von Natriumnitrit man rührt dieses Diazotierungsgemisch noch 1 Stunde lang und entfernt sodann überschüssiges Nitrit mit Amidosulfonsäure. 47,3 Teile 1-(p-Toluolsulfonyl-amino)-8-naphthol-3,6-disulfonsäure werden eingetragen und der pH-Wert zwecks Kupplung auf 5 bis 6 gestellt. Nach Beendigung der Kupplung wird die Lösung geklärt und die Azoverbindung auf übliche Weise isoliert. Man erhält ein elektrolythaltiges violettes Pulver, das das Alkalisalz der Verbindung der Formel

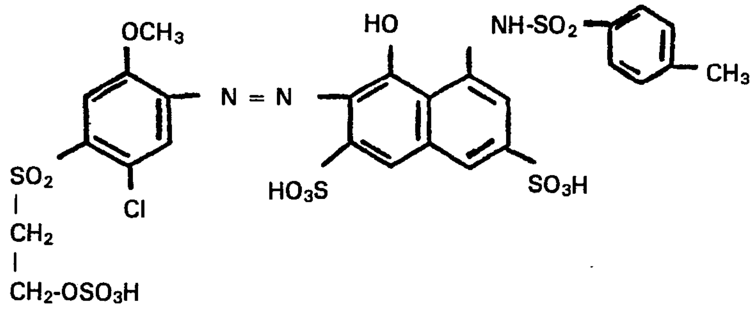

enthält. Diese Verbindung eignet sich mit guten Anwendungseigenschaften bei für faserreaktive Farbstoffe üblichen Applikations- und Fixiermethoden als Farbstoff zur Herstellung von violetten Färbungen und Drucken mit guten Gebrauchsechtheiten auf den in der Beschreibung genannten Fasermaterialien.

*Beispiel 4*

Eine neutrale Lösung der Azoverbindung des Beispieles 3 wird mit der äquivalenten Menge an Kupfer(II)-hydroxycarbonat versetzt und mit Natriumacetat und Essigsäure auf einen pH-Wert von 4,5 eingestellt. Man erhitzt dieses Gemisch 3 bis 6 Stunden lang zum Sieden unter Einhaltung dieses pH-Wertes mittels des Natriumacetat/Eisessig-Puffers. Anschliessend wird das heisse Reaktionsgemisch geklärt, das Filtrat zur Trockne eingedampft. Man erhält ein salzhaltiges, blauschwarzes Pulver, das das Alkalisalz der Verbindung der Formel

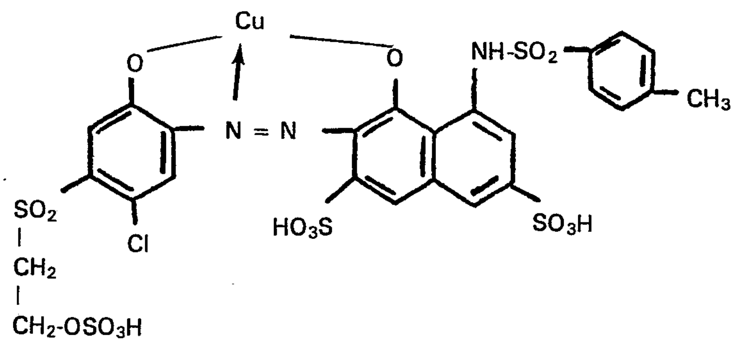

enthält. Diese Verbindung zeigt sehr gute Farbstoffeigenschaften und liefert Färbungen und Drucke mit guten anwendungstechnischen und Echtheitseigenschaften in analoger Weise, wie für den Farbstoff des Beispieles 1 beschrieben.

*Beispiel 5*

168 Teile 2-Äthoxy-5-chlor-4-(β-hydroxyäthylsulfonyl)-anilin werden in 1800 Teilen Wasser gelöst, mit 210 Teilen konzentrierter Salzsäure versetzt, auf 0 - 5°C abgekühlt und durch Zugabe von 120 Teilen einer wässrigen 5n-Natriumnitritlösung diazotiert. Zu dieser Diazoniumsalzsuspension gibt man eine Lösung von 134,4 Teilen 1-Naphthol-4-sulfonsäure in 1200 Teilen Wasser und führt die Kupplungsreaktion bei einem pH-Wert von 6 - 7 durch Zugabe von etwa 54 Teilen einer konzentrierten Natronlauge durch. Die erhaltene Azoverbindung wird durch Zugabe von wenig Natriumchlorid abgeschieden; man erhält ein Pulver, das neben wenig Elektrolyt (Natriumchlorid) das Natriumsalz der Verbindung der Formel

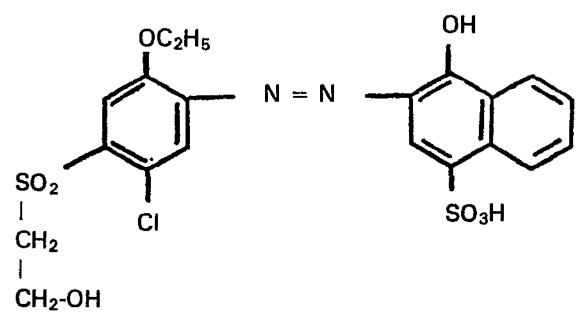

enthält. 103 Teile dieser Azoverbindung werden in 100 Teilen konzentrierter Schwefelsäure bei 20 bis 25°C unter Rühren gelöst. nach erfolgter Lösung gibt man das Reaktionsgemisch auf ein Gemisch aus 500 Teilen Eis und Wasser, salzt die Verbindung mit Natriumchlorid aus und saugt sie ab. Den feuchten Filterkuchen suspendiert man in 400 Teilen Wasser, stellt den pH-Wert durch Natriumcarbonat auf 5, klärt die Lösung und dampft sie zur Trockne (beispielsweise durch Sprühtrocknung) ein. Man erhält ein elektrolythaltiges Pulver mit dem Natriumsalz der Verbindung der Formel

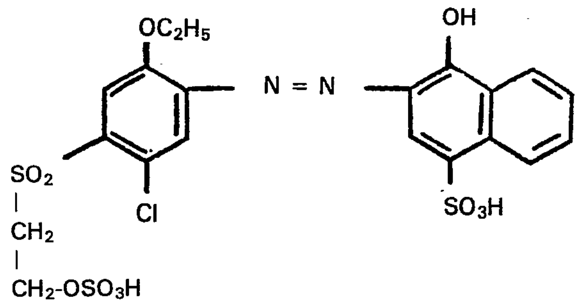

Diese Azoverbindung mit der Sulfatoäthylsulfonylgruppe stellt einen sehr guten faserreaktiven Farbstoff dar, der Materialien aus Cellulosefasern, synthetischen und nativen Polyamidfasern, wie Baumwolle, Leinen, Wolle, Seide, Polyamid-6, in leuchtend scharlachroten Nuancen färbt. Seine Färbungen und Drucke besitzen die in Beispiel 1 genannten guten bis sehr guten Fabrikations- und Gebrauchsechtheiten.

*Beispiel 6*

Eine wässrige Lösung der $\beta$-Sulfatoäthylsulfonyl-Azoverbindung des Beispiels 5 wird mit konzentrierter Natronlauge auf einen pH-Wert von 11 - 12 gestellt und 30 Minuten lang unter Einhaltung dieses pH-Wertes bei einer Temperatur von 20°C gerührt. Anschliessend stellt man den pH-Wert durch Säure auf 6 zurück und isoliert die Azoverbindung durch Aussalzen mit Natriumchlorid. Sie wird abgesaugt und bei 80 - 100°C getrocknet. Das erhaltene elektrolythaltige Pulver mit dem Alkalimetallsalz (Natriumsalz) der Verbindung der Formel

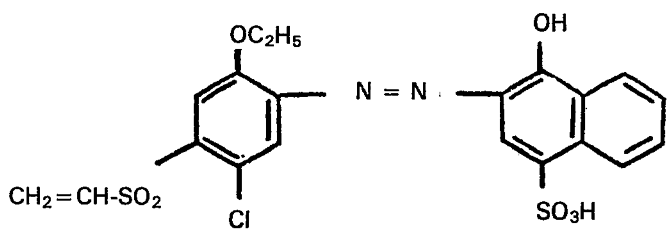

besitzt sehr gute Farbstoffeigenschaften. Mit ihm werden Färbungen und Drucke, insbesondere nach den für Reaktivfarbstoffe üblichen Applikations- und Fixiermethoden auf Cellulosefasermaterial, mit den für die erfindungsgemässen Farbstoffe erwähnten guten anwendungstechnischen Eigenschaften und Echtheiten erhalten.

*Beispiel 7*

Eine wässrige Lösung der Vinylsulfonyl-Azoverbindung des Beispieles 6 mit einem pH-Wert von 6 wird mit der äquivalenten Menge von Diäthylamin versetzt; diese Reaktionslösung wird bei 20 bis 25°C mehrere Stunden lang gerührt. Mit wässriger Salzsäure wird danach ein pH-Wert von 5 - 6 eingestellt und die Azoverbindung mit Natriumchlorid ausgesalzen. Nach etwa 3 Stunden wird die ausgefällte Verbindung abgesaugt und unter reduziertem Druck getrocknet. Man erhält ein elektrolythaltiges Pulver mit dem Alkalisalz (Natriumsalz) der Verbindung der Formel

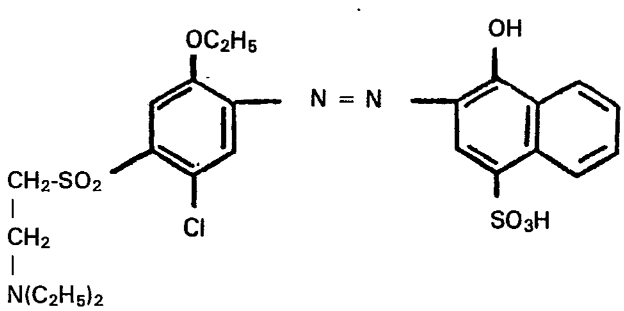

die ebenfalls sehr gute Farbstoffeigenschaften zeigt und Färbungen und Drucke in einem leuchtenden Scharlachrot mit den in Beispiel 5 genannten Echtheitseigenschaften liefert. Die elektrolyt- und alkalihaltigen Klotzflotten und Druckpasten dieses Farbstoffes zeigen eine hohe Haltbarkeit.

*Beispiel 8*

Eine wässrige Lösung der Vinylsulfonyl-Azoverbindung des Beispieles 6 mit einem pH-Wert von 5 - 6 wird mit der äquivalenten Menge an Natriumthiosulfat versetzt und 6 Stunden lang bei 60 - 65°C verrührt. Durch Zugabe von Essigsäure wird der pH-Wert von 5 - 6 gehalten. Anschliessend wird die Lösung heiss geklärt und sprühgetrocknet. Man erhält ein elektrolythaltiges rotes Pulver mit dem Natriumsalz der Verbindung der Formel

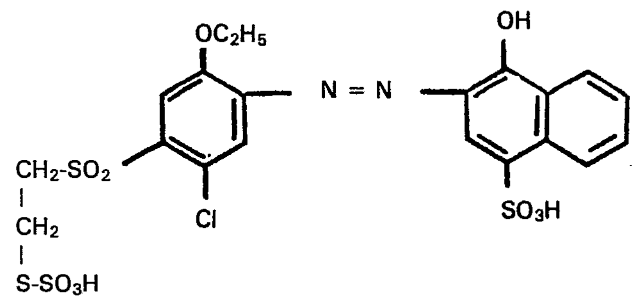

Diese besitzt ebenso gute Farbstoffeigenschaften und färbt Cellulosefasermaterialien und native Polyamidfasermaterialien nach üblichen Färbeweisen, wie sie insbesondere für Farbstoffe mit einer β-Thiosulfatoäthylsulfonyl-Gruppe beschrieben sind, in den für den Farbstoff des Beispiels 5 beschriebenen guten Echtheitseigenschaften.

*Beispiel 9*

51,5 Teile der in Beispiel 5 hergestellten Azoverbindung mit der β-Hydroxyäthylsulfonylgruppe werden innerhalb von einer Stunde in ein Gemisch aus 50 Teilen Polyphosphorsäure mit einem Gehalt an $P_2O_5$ von 84 - 85% und 10 Teilen einer 80%igen Orthophosphorsäure bei einer Temperatur von 130°C unter Rühren eingetragen; diese Reaktionslösung wird noch 2 Stunden lang bei dieser Temperatur gerührt, anschliessend langsam in 150 Teile Wasser gegossen und darin nochmals 2 Stunden bei 80 - 90°C gerührt. Die so hergestellte Phosphorsäureester-Azoverbindung wird mit Kaliumchlorid ausgesalzen und abgesaugt. Der feuchte Filterkuchen wird sodann in 200 Teilen Wasser gelöst, mit Natriumcarbonat neutral gestellt, die Lösung sprühgetrocknet. Man erhält das Alkalisalz der Verbindung der Formel

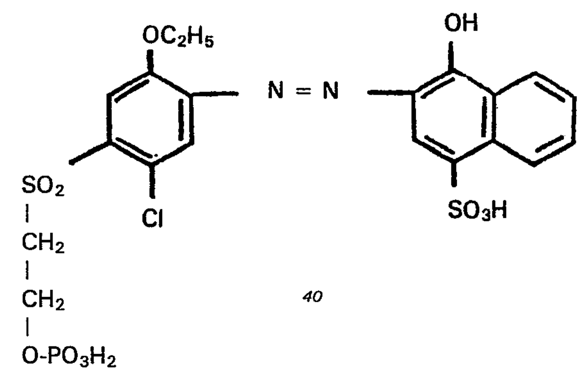

das sehr gute Farbstoffeigenschaften zeigt und Cellulosefasermaterialien und Polyamidfasermaterialien nach den für Reaktivfarbstoffe üblichen Anwendungsverfahren in scharlachroten Tönen färbt. Es besitzt die gleichen ausgezeichneten Fabrikations- und Gebrauchsechtheiten wie der in Beispiel 5 beschriebene β-Sulfatoäthylsulfonyl-Farbstoff. Die Salz- und alkalihaltigen Klotzflotten und Druckpasten dieser Phosphatoverbindung zeigen eine hohe Haltbarkeit.

*Beispiel 10*

Eine Lösung von 36 Teilen 2-Äthoxy-5-chlor-4--(β-sulfatoäthylsulfonyl)-anilin in 200 Teilen Wasser mit einem pH-Wert von 7 werden mit 14 Teilen einer wässrigen 40%igen Natriumnitritlösung versetzt. Sodann gibt man dieser Lösung ein Gemisch aus 100 Teilen Eis und 30 Teilen konzentrierter Salzsäure hinzu und rührt diesen Diazotierungsansatz etwa 30 Minuten lang. Überschüssiges Nitrit wird mit Amidosulfonsäure zerstört. 25,4 Teile 1-(4'-Sulfophenyl)-3--methyl-5-pyrazolon werden eingetragen, der pH-Wert auf 4 gestellt, das Kupplungsgemisch noch etwa 1 Stunde lang gerührt. Die erhaltene Lösung wird geklärt und die Azoverbindung auf übliche Weise (Eindampfen oder Aussalzen) isoliert. Man erhält ein elektrolythaltiges, dunkelbraunes Pulver mit dem Alkalisalz der Verbindung der Formel

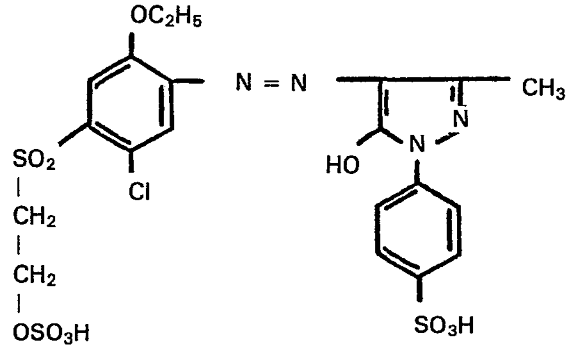

die sehr gute Farbstoffeigenschaften besitzt. Nach den für Reaktivfarbstoffe üblichen Applikations- und Fixiermethoden liefert diese Verbindung auf Cellulose- und Polyamidfasermaterial farbstarke Druck und Färbungen von klarer rotstichig gelber Nuance mit den für den Farbstoff des Beispieles 1 genannten sehr guten Fabrikations- und Gebrauchsechtheiten; er zeigt ebenso einen sehr guten Farbaufbau.

*Beispiel 11*

31,3 Teile der Sulfatoäthylsulfonyl-Azoverbindung des Beispieles 10 werden in 300 Teilen Wasser gelöst, mit 20 Teilen kristallinem Natriumacetat, 14 Teilen Eisessig und 15 Teilen Kupfer(II)sulfat-Hydrat versetzt; man rührt bei einem pH-Wert von 4-4,5 unter Rückfluss sechs Stunden lang. Das heisse Reaktionsgemisch wird anschliessend geklärt, die Azoverbindung auf übliche Weise isoliert und getrocknet. Man erhält ein schwarzbraunes elektrolythaltiges Pulver mit der fasereaktiven Kupferkomplexverbindung der Formel

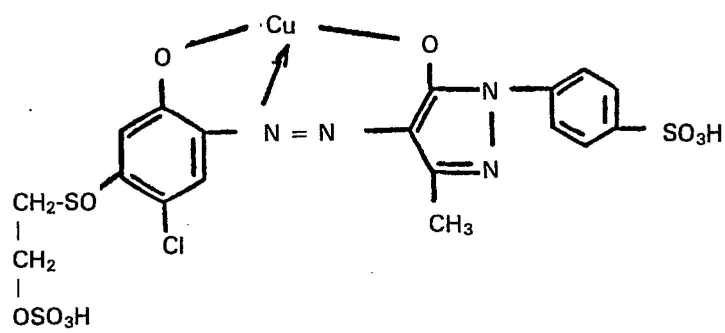

(als Alkalisalz), die gute Farbstoffeigenschaften besitzt und beispielsweise auf Baumwolle kräftige Färbungen und Drucke von einem gelbstichigen Braun und sehr guten Fabrikations- und Gebrauchsechtheiten liefert, von denen besonders die hervorragende Lichtechtheit auf trockenem und feuchtem Fasermaterial, auch von solchem mit Kunstharzausrüstung, hervorzuheben ist.

*Beispiele 12 bis 58*

Die in den nachfolgenden Tabellenbeispielen durch ihre Diazo- und Kupplungskomponenten charakterisierten erfindungsgemässen Azoverbindungen der allgemeinen Formel (1) bzw. deren Kupferkomplexe der allgemeinen Formel (4) lassen sich ebenfalls in erfindungsgemässer Weise, beispielsweise gemäss den Verfahrensweisen der obigen Ausführungsbeispiele, durch Umsetzung der Diazoniumverbindung des genannten Amins entsprechend der allgemeinen Formel (5) mit der Kupplungskomponente entsprechend der allgemeinen Formel (6) und gegebenenfalls durch anschliessende entalkylierende Kupferungsreaktion herstellen. Diese erfindungsgemässen faserreaktiven Azoverbindungen bzw. deren Kupferkomplexverbindungen besitzen sehr gute Farbstoffeigenschaften und liefern Färbungen und Drucke auf den in der Beschreibung genannten Fasermaterialien, insbesondere auf Cellulosefasermaterialien nach den für faserreaktive Farbstoffe üblichen Applikations- und Fixiermethoden, mit sehr guten anwendungstechnischen Eigenschaften und Echtheiten.

| Beispiel | Diazokomponente-Verbindung der allgemeinen Formel (5) | Kupplungskomponente-Verbindung der allgemeinen Formel (6) | Farbton der Färbung der Azoverbindung der allgemeinen Formel (1) | Kupferkomplexverbindung der allgemeinen Formel (4) |
|---|---|---|---|---|
| 12 | 2-Methoxy-5-chlor-4--(β-sulfatoäthylsulfonyl)-anilin | 1-Acetylamino-8-naphthol--4,6-disulfonsäure | blaustichig rot | violett |
| 13 | dito | 2-Acetylamino-8-naphthol--6-sulfonsäure | rot | violett |
| 14 | dito | 2-Acetylamino-7-naphthol--5-sulfonsäure | orange | blaustichig rot |
| 15 | dito | 2-Acetylamino-8-naphthol--3,6-disulfonsäure | blaustichig rot | violett |
| 16 | dito | 1-Amino-8-naphthol-2,4--disulfonsäure | violett | marineblau |
| 17 | dito | 1-Amino-8-naphthol-3,6--disulfonsäure (neutral gekuppelt | violett | marineblau |
| 18 | dito | 1-Amino-8-naphthol-4,6--disulfonsäure (neutral gekuppelt) | violett | marineblau |
| 19 | dito | 1-Phenylureido-8-naphthol--3,6-disulfonsäure | blaustichig rot | violett |
| 20 | 2-Methoxy-5-chlor-4--(βsulfatoäthylsulfonyl)-anilin | 1-Naphthol-3-sulfonsäure | orange | blaustichig rot |
| 21 | dito | 1-Naphthol-4-sulfonsäure | rot | violett |
| 22 | dito | 2-Naphthol-5-sulfonsäure | rot | violett |
| 23 | dito | 2-Naphthol-6-sulfonsäure | rot | violett |
| 24 | dito | 2-Naphthol-8-sulfonsäure | rot | violett |
| 25 | 2-Methoxy-5-chlor-4--vinylsulfonyl-anilin | 1-Acetylamino-8-naphthol -3,6-disulfonsäure | blaustichig rot | violett |
| 26 | dito | 1-Benzoylamino-8-naphthol--3,6-disulfonsäure | blaustichig rot | violett |
| 27 | dito | 1-Phenylureido-8-naphthol--3,6-disulfonsäure | blaustichig rot | violett |
| 28 | dito | 1-Phenylureido-8-naphthol--4,6-disulfonsäure | blaustichig rot | violett |
| 29 | dito | 1-Naphthol-3,6-disulfonsäure | rot | vilett |
| 30 | dito | 1-Naphthol-3,6,8-trisulfonsäure | rot | violett |
| 31 | dito | 2-Naphthol-3,6-disulfonsäure | rot | violtt |
| 32 | 2-Methoxy-5-chlor-4--vinylsulfonyl-anilin | 2-Naphthol-6,8-disulfonsäure | orange | braun |
| 33 | 2-Methoxy-5-chlor-4-(β-diäthylaminoäthyl-sulfonyl)-anilin | 1-Acetylamino-8-naphthol--3,6-disulfonsäure | blaustichig rot | violett |
| 34 | dito | 1-Acetylamino-8-naphthol--4,6-disulfonsäure | blaustichig rot | violett |
| 35 | dito | 1-Naphthol-3,6-disulfonsäure | rot | violett |
| 36 | dito | 2-Naphthol-3,6-disulfonsäure | rot | violett |
| 37 | 2-Methoxy-5-chlor-4-(β-thiosulfatoäthyl-sulfonyl)-anilin | 1-Acetylamino-8-naphthol--3,6-disulfonsäure | blaustichig rot | violett |
| 38 | dito | 1-Naphthol-4-sulfonsäure | rot | violett |
| 39 | 2-Äthoxy-5-chlor-4-(β-phosphatoäthyl-sulfonyl)-anilin | 1-Acetylamino-8-naphthol--3,6-disulfonsäure | blaustichig rot | violett |

| Beispiel | Diazokomponente-Verbindung der allgemeinen Formel (5) | Kupplungskomponente-Verbindung der allgemeinen Formel (6) | Farbton der Färbung der Azoverbindung der allgemeinen Formel (1) | Farbton der Färbung der Kupferkomplexverbindung der allgemeinen Formel (4) |
|---|---|---|---|---|
| 40 | dito | 1-Acetylamino-8-naphthol-4,6-disulfonsäure | blaustichig rot | violett |
| 41 | dito | 2-Acetylamino-8-naphthol-6-sulfonsäure | blaustichig rot | violett |
| 42 | 2-Äthoxy-5-chlor-4-(β-phosphato-äthyl-sulfonyl)-anilin | 1-Naphthol-5-sulfonsäure | rot | violett |
| 43 | 2-Methoxy-5-chlor-4-(β-sulfato-äthyl-sulfonyl)-anilin | 1-Benzoylamino-8-naphthol-4,6-disulfonsäure | blaustichig rot | violett |
| 44 | dito | Acetoacetylanilin-3-sulfonsäure | gelb | gelbstichig braun |
| 45 | dito | 1-(4'-Sulfophenyl)-3-methyl-5-pyrazolon | gelb | gelbstichig braun |
| 46 | dito | 1-(4'-Sulfophenyl)-5-pyrazolon-3-carbonsäure | gelb | gelbstichig braun |
| 47 | dito | 1-(4'-Sulfophenyl)-3-carbäthoxy-5-pyrazolon | gelb | gelbstichig braun |
| 48 | dito | 1-(2'-Chlor-5'-sulfophenyl)-3-methyl-5-pyrazolon | gelb | gelbstichig braun |
| 49 | dito | 1-(2',5'-Disulfophenyl)-3-methyl-5-pyrazolon | gelb | gelbstichig braun |
| 50 | dito | 1-[4',8'-Disulfo-naphthyl(2)]-3-methyl-5-pyrazolon | gelb | gelbstichig braun |
| 51 | dito | 1-(4'-Sulfophenyl)-3-methyl-5-aminopyrazol | gelb | — |
| 52 | 2-Methoxy-5-chlor-4-(β-sulfato-äthyl-sulfonyl)-anilin | 8-Hydroxychinolin-5-sulfonsäure | orange | rotbraun |
| 53 | dito | Acetoacetylanilin-2-carbonsäure | gelb | — |
| 54 | dito | 1,4-Dimethyl-2-hydroxy-pyridon(6)-5-sulfonsäure | gelb | gelbstichig braun |
| 55 | dito | N-Äthyl-N-(3'-sulfobenzyl)-anilin | orange | — |
| 56 | dito | N,N-Bis-(β-hydroxyäthyl)-anilin | orange | — |
| 57 | dito | N,N-Bis-(β-sulfatoäthyl)-anilin | orange | — |
| 58 | dito | Diphenylamin-4-sulfonsäure | orange | — |

*Beispiel 59*

Man diazotiert in üblicher Weise, beispielsweise wie in Beispiel 1 beschrieben, 34,6 Teile 2-Methoxy-5-chlor-4-(β-sulfatoäthylsulfonyl)-anilin und versetzt danach die Suspension des Diazoniumsalzes mit 14,4 Teilen 1-Amino-8-naphthol-3,6-disulfonsäure; zur Beendigung der Kupplungsreaktion im sauren Medium wird noch 6 Stunden lang weitergerührt. Anschliessend stellt man mit Natriumcarbonat auf einen pH-Wert von 6 und rührt eine weitere Stunde weiter, wobei die zweite Kupplungsreaktion erfolgt. Die so hergestellte Disazoverbindung wird auf übliche Weise (Aussalzen oder Eindampfen oder Sprühtrocknen der geklärten Lösung) isoliert. Man erhält ein schwarzes, elektrolythaltiges Pulver, das das Alkalisalz der Verbindung der Formel

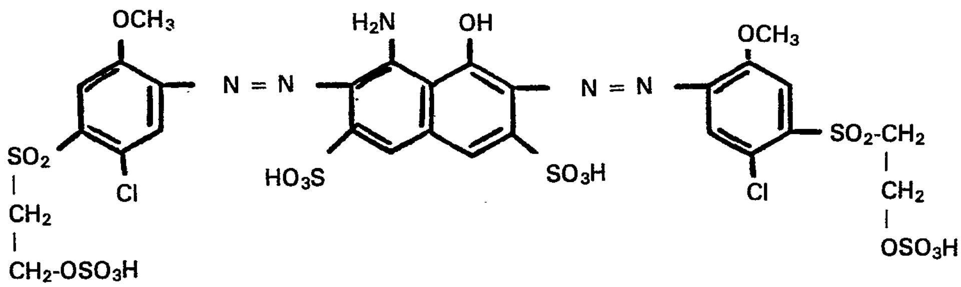

enthält. Diese Disazoverbindung eignet sich sehr gut als Farbstoff; sie färbt, insbesondere nach üblichen Verfahren der Applikation und Fixierung für Reaktivfarbstoffe, auf Cellulosefasermaterialien und ebenso auf Polyamidfasermaterialien farbtiefe, grünstichig schwarze Färbungen und Drucke mit guten Echtheiten, wie einer guten Waschechtheit bei 40 - 95°C, einer guten Peroxydwaschechtheit, Wasserechtheit (schwer), alkalischen und sauren Schweissechtheit, Chlorbadewasserechtheit, Abgasechtheit, einer guten Lichtechtheit auf trockenem und feuchtem Fasermaterial.

*Beispiel 60*

Es wird eine Diazoniumsalzsuspension entsprechend den Angaben des Beispieles 10 aus 18 Teilen 2-Äthoxy-5-chlor-4-(β-sulfatoäthylsulfonyl)-anilin hergestellt und mit 14,4 Teilen 1-Amino-8-naphthol-6-disulfonsäure versetzt; das Kupplungsgemisch wird im sauren Medium noch 5 - 6 Stunden lang gerührt. Sodann bereitet man in üblicher Weise aus 8,7 Teilen 1-Aminobenzol-2-sulfonsäure dessen Diazoniumsalzlösung, giesst diese in die Lösung der hergestellten Monoazoverbindung und führt die zweite Kupplung nach Einstellung eines pH-Wertes von 5 - 6 und Einhaltung dieses pH-Wertes unter Rühren mehrere Stunden durch. Die so erhaltene Disazoverbindung kann auf üblichem Wege (durch Aussalzen oder Sprühtrocknung der zuvor geklärten Lösung) isoliert werden. Man erhält ein elektrolythaltiges, schwarzes Pulver, das das Alkalimetallsalz der Verbindung der Formel

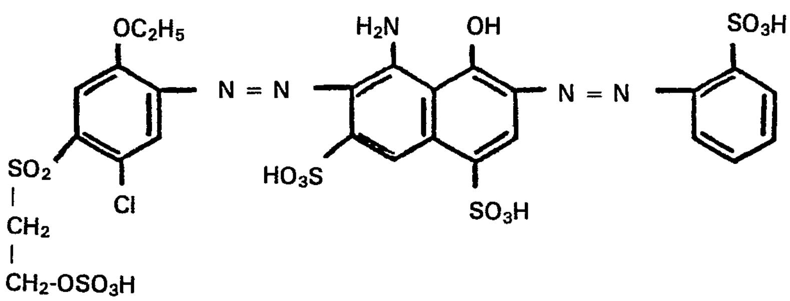

enthält. Diese Disazoverbindung eignet sich sehr gut als Farbstoff zum Färben von Cellulosefasermaterialien und Materialien aus nativen und synthetischen Polyamidfasern. Nach für faserreaktive Farbstoffe üblichen Applikations- und Fixierverfahren liefert dieser Farbstoff Drucke und Färbungen in kräftigen, grünstichig schwarzen Tönen mit sehr guten Echtheiten, wie sie beispielsweise in der vorliegenden Beschreibung oder in Beispiel 1 erwähnt sind.

*Beispiel 61*

Eine neutrale Lösung von 30,3 Teilen 2-Naphthylamin-4,8-disulfonsäure in 250 Teilen Wasser werden mit 70 Teilen einer konzentrierter wässrigen Salzsäure und 100 Teilen Eis versetzt. Unter Rühren giesst man 14 Teile einer wässrigen 40%igen Natriumnitritlösung hinzu und rührt anschliessend noch eine Stunde; überschüssiges Nitrit wird mit Amidosulfonsäure entfernt. Sodann gibt man 11,2 Teile Resorcin hinzu und rührt das Kupplungsgemisch im sauren Medium 6 bis 8 Stunden bei 10 - 25°C, erhöht sodann die Temperatur auf 45°C und rührt weitere 4 bis 6 Stunden bei dieser Temperatur nach. Das Reaktionsgemisch wird anschliessend auf einen pH-Wert von 6 - 7 mit etwa 250 Teilen konzentrierter Natronlauge eingestellt. Eine gemäss Beispiel 1 hergestellte saure Diazoniumsalzsuspension aus 34,6 Teilen 2-Methoxy-5-chlor-4-(β-sulfatoäthylsulfonyl)-anilin gibt man der soeben hergestellten und auf 0 bis 10°C gekühlten Lösung der Azoverbindung hinzu. Man stellt den pH-Wert zur Durchführung der zweiten Kupplungsreaktion mit Natriumcarbonat auf 6 - 7 ein und rührt 10 Stunden lang weiter, bis kein Diazoniumsalz mehr nachweisbar ist. Sodann gibt man zur Lösung der so hergestellten Disazoverbindung 25 Teile kristallisiertes Kupfer(II)-sulfat und stellt die Lösung auf einen pH-Wert mittels Eisessig und/oder Natriumacetat auf 5. Die entalkylierende Kupferungsreaktion wird unter Rückfluss und Rühren 3 bis 6 Stunden lang durchgeführt. Anschliessend klärt man das Reaktionsgemisch und isoliert die Kupferkomplex-Disazoverbindung auf üblichem Wege. Es wird ein elektrolythaltiges, schwarzbraunes Pulver erhalten, das das Alkalimetallsalz der Kupferkomplexverbindung mit der vermutlichen Konstitution

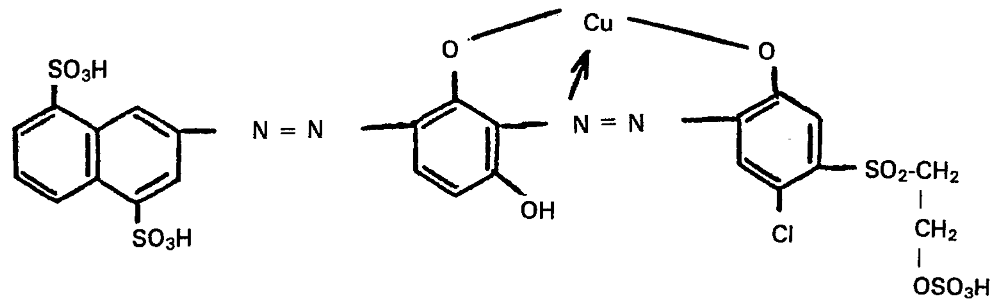

enthält. Diese Kupferkomplexdisazoverbindung eignet sich sehr gut als Farbstoff und liefert auf Fasermaterialien aus Cellulose, nativen und synthetischen Polyamiden nach den für faserreaktive Farbstoffe üblichen Färbemethoden farbstarke Färbungen und Drucke von rotbrauner Nuance und guten bis sehr guten Fabrikations- und Gebrauchsechtheiten.

**Patentansprüche**

1. Wasserlösliche Monoazo- und Disazoverbindungen der allgemeinen Formel (1)

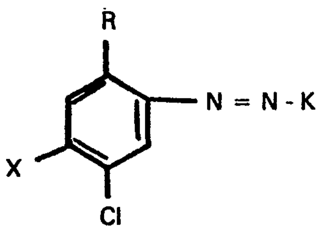 (1)

in welcher bedeuten:

K ist der Rest einer einfach oder doppelt ankuppelbaren wasserlöslichen Kupplungskomponente aus der Reihe der Aminobenzole, der Phenole, der Naphthole, der Aminonaphthole, der Acylamino-naphthole, mit dem Acylrest einer Alkan- oder Alkencarbonsäure mit jeweils 1 bis 4 C-Atomen im Alkyl- oder Alkenylrest oder einer aromatischen Carbonsäure oder einer aromatischen Sulfonsäure oder der N-substituierten Carbaminsäure oder aus der Reihe der Dihydroxynaphthalinsulfonsäuren, der Phenylazo- und Naphthylazoaminonaphtholsulfonsäuren, der 5-Pyrazolone und 5-Aminopyrazole, der Acetoacetylarylide, der 2-Hydroxy-6-pyridone und der Hydroxychinoline;

R ist eine Alkoxygruppe von 1 bis 4 C-Atomen;

X ist ein Rest der Formel (2) oder der allgemeinen Formel (3)

$$-SO_2-CH=CH_2 \quad (2)$$

$$-SO_2-CH_2-CH_2-Z \quad (3)$$

in welcher Z eine alkalisch eliminierbare Gruppe bedeutet.

2. Die Kupferkomplexverbindungen der in Anspruch 1 genannten und definierten Mono- und Disazoverbindungen.

3. Disazoverbindungen nach Anspruch 1 der allgemeinen Formel (in Form der freien Säure geschrieben)

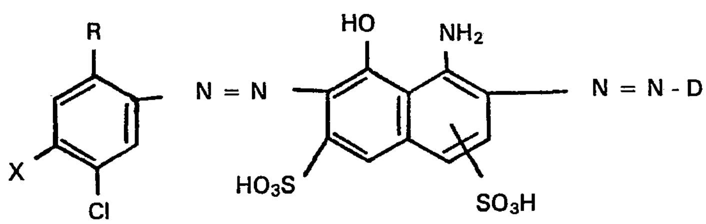

oder der allgemeinen Formel (in Form der freien Säure geschrieben)

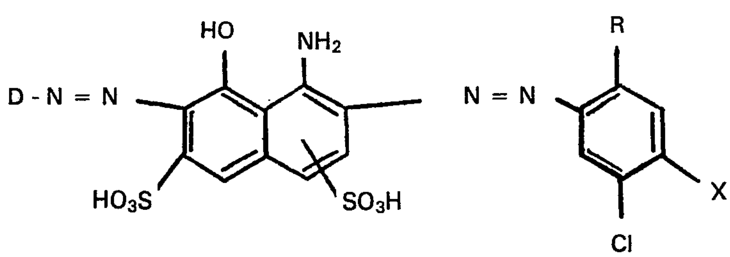

in welcher R und X die in Anspruch 1 genannten Bedeutungen haben und D den Phenyl- oder Naphthylrest darstellt, der durch 1, 2 oder 3 Substituenten aus der Gruppe Chlor, Brom, Alkyl von 1 bis 4 C-Atomen, Alkoxy von 1 bis 4 C-Atomen, Hydroxy, Sulfo, Carboxy, Carbamoyl und Sulfamoyl substituiert sein kann und gegebenenfalls durch einen Rest des in Anspruch 1 definierten Formelgliedes X substituiert ist.

4. Kupferkomplex-Verbindungen nach Anspruch 2 der Formeln (4a), (4b) oder (4c)

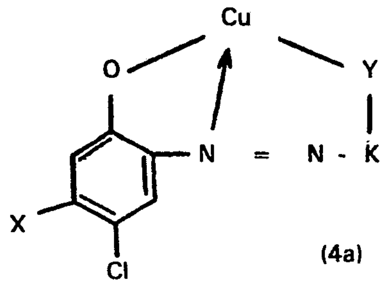

(4a)

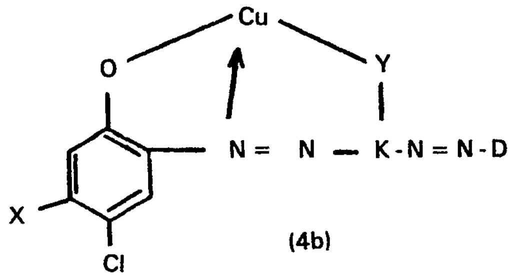

(4b)

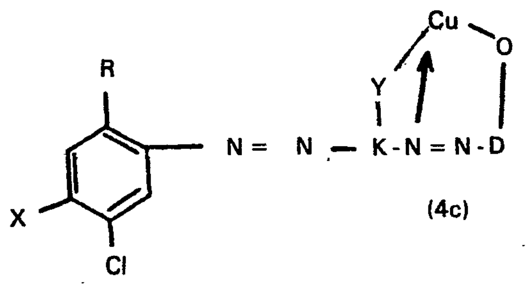

(4c)

in welchen X und K die in Anspruch 1 genannten Bedeutungen haben, D den Phenyl- oder Naphthylrest bedeutet, der durch 1, 2 oder 3 Substituenten aus der Gruppe Chlor, Brom, Alkyl von 1 bis 4 C-Atomen, Alkoxy von 1 bis 4 C-Atomen, Hydroxy, Sulfo, Carboxy, Carbamoyl und Sulfamoyl substituiert sein kann und gegebenenfalls durch einen Rest entsprechend dem oben definierten Formelglied X substituiert ist, und Y als eine das Kupferatom komplex bindende Gruppe den Rest der Formel -O- oder -NH- darstellt.

5. Metallfreie Monoazoverbindungen der Kupferkomplex-Monoazoverbindungen nach Anspruch 1, 2 oder 4, dadurch gekennzeichnet, dass K den Rest des 1-Naphthols oder 2-Naphthols bedeutet, die durch 1, 2 oder 3 Sulfonsäuregruppen substituiert sind, oder den Rest des 1-Naphthols oder 2-Naphthols darstellt, die durch 1 oder 2 Sulfonsäuregruppen und durch eine Acetylamino-, Propionylamino-, Benzoylamino-, Benzolsulfonylamino- oder Tosylamino-Gruppe substituiert sind, oder den Rest des 1-Phenyl-5-pyrazolons bedeutet, der in 3-Stellung durch die Methyl-, Carbomethoxy-, Carbäthoxy- oder die Carboxygruppe substituiert ist und dessen Phenylrest durch 1 oder 2 Substituenten aus der Gruppe Methyl, Chlor und Sulfo substituiert sein kann, wobei in Formel (4a) von Anspruch 4 der Formelrest Y für das Sauerstoffatom steht.

6. Verbindungen nach Anspruch 3 oder 4, dadurch gekennzeichnet, dass D den Phenyl- oder Naphthylrest bedeutet, die durch 1, 2 oder 3 Substituenten aus der Gruppe Chlor, Methyl, Methoxy, Sulfo und Hydroxy substituiert sein können, oder den Rest der Formel

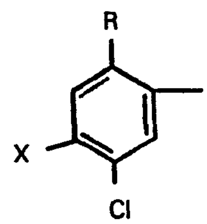

mit R und X der in Anspruch 1 genannten Bedeutung darstellt, und K und Y die in Anspruch 4 genannten Bedeutungen haben.

7. Monoazoverbindungen der allgemeinen Formel (1) nach Anspruch 1, dadurch gekennzeichnet, dass R für die Methoxygruppe steht, X den β-Sulfatoäthylsulfonyl- oder den Vinylsulfonyl-Rest bedeutet und K den 1-Hydroxy-4-sulfo-naphth-2-yl, den 1-Hydroxy-3,6-disulfo-naphth-2-yl-, den 1-Hydroxy-8-acetylamino-3,6-disulfo-naphth-2-yl-, den 1-(4'-Sulfophenyl)-3-methyl-pyrazol-5-on-4-yl- oder den 1-(4'-Sulfophenyl)-3-carboxy-pyrazol-5-on-4-yl-Rest bedeutet.

8. Disazoverbindungen nach Anspruch 1 der Formel (in Form der freien Säure geschrieben)

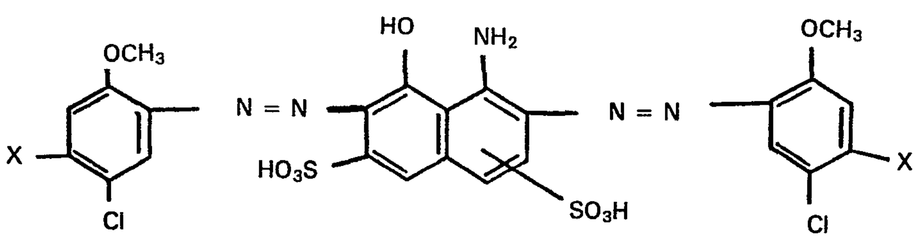

worin X für die Vinylsulfonyl- oder die β-Sulfatoäthylsulfonyl-Gruppe steht.

9. Verfahren zur Herstellung der in Anspruch 1 genannten und definierten Verbindungen der allgemeinen Formel (1), dadurch gekennzeichnet, dass man ein aromatisches Amin der allgemeinen Formel (5)

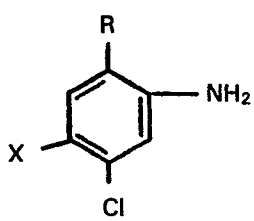

(5)

in welcher R und X die in Anspruch 1 genannten Bedeutungen haben, diazotiert und mit einer Kupplungskomponente der allgemeinen Formel (6) oder der allgemeinen Formel (6a)

H - K (6) H - K - H (6a)

in welchen K die in Anspruch 1 genannten Bedeutungen haben, einfach oder zweifach kuppelt.

10. Verfahren zur Herstellung von Disazoverbindungen von Anspruch 1, dadurch gekennzeichnet, dass man eine doppelt ankuppelbare Verbindung der allgemeinen Formel (6a)

H - K - H

mit K der in Anspruch 1 genannten Bedeutung zunächst mit der Diazoniumverbindung des Amins der allgemeinen Formel (5) oder eines anderen aromatischen Amins der Anilin- oder Naphthylaminreihe, bevorzugt eines Amins der allgemeinen Formel (7)

$$D - NH_2 \qquad (7)$$

mit D der obengenannten Bedeutung, zunächst im sauren Medium kuppelt und sodann die zweite Kupplungsreaktion mit dem zweiten Mol einer Diazoniumverbindung eines Amins der allgemeinen Formel (5) oder eines Amins der Anilin- oder Naphthylamin-Reihe, jedoch zwingend mit der Diazoniumverbindung des Amins der allgemeinen Formel (5), sofern die erste Kupplungsreaktion mit der Diazoniumverbindung eines Amins der Anilin- oder Naphthylamin-Reihe durchgeführt wurde, im schwach sauren, neutralen oder schwach alkalischen Bereich durchführt.

11. Verfahren zur Herstellung der Kupferkomplex-Verbindungen von Anspruch 2, dadurch gekennzeichnet, dass man eine in Anspruch 1 genannte und definierte Verbindung der allgemeinen Formel (1) oder eine nach Anspruch 8 oder 9 hergestellte Verbindung der allgemeinen Formel (1), sofern die Kupplungskomponente K ortho-ständig zur Azogruppe eine Hydroxy- oder Aminogruppe enthält, mit einem kupferabgebenden Mittel entalkylierend umsetzt.

12. Verfahren zur Herstellung der Verbindungen der allgemeinen Formel (1) oder deren Kupferkomplex-Verbindungen von Anspruch 1 oder 2 mit X einer Äthylsulfonylgruppe, die in β-Stellung durch eine Säureester- oder Acyloxygruppe substituiert ist, dadurch gekennzeichnet, dass man eine Verbindung der allgemeinen Formel (1) oder deren Kupferkomplex-Verbindung mit Z gleich der β-Hydroxyäthylsulfonyl-Gruppe mit einem Versterungs- oder Acylierungsmittel umsetzt.

13. Verfahren zur Herstellung der Verbindungen der allgemeinen Formel (1) oder deren Kupferkomplex-Verbindungen von Anspruch 1 der 2 mit X gleich dem Äthylsulfonylrest, der in β-Stellung durch eine Dialkylaminogruppe mit jeweils 1 bis 4 C-Atomen oder durch die Thiosulfatogruppe substituiert ist, dadurch gekennzeichnet, dass man eine Verbindung der allgemeinen Formel (1) oder deren Kupferkomplex-Verbindung mit X der Vinylsulfonylgruppe mit einem Dialkylamin mit Alkylresten von jeweils 1 bis 4 C-Atomen bzw. mit einem Salz der Thioschwefelsäure umsetzt.

14. Verwendung der Verbindungen von Anspruch 1 oder 2 als Farbstoffe.

15. Verwendung nach Anspruch 14 zum Färben und Bedrucken von hydroxy- und carbonamidgruppenhaltigen Materialien.

## Claims

1. Water-soluble monoazo or diazo compounds of the general formula (1)

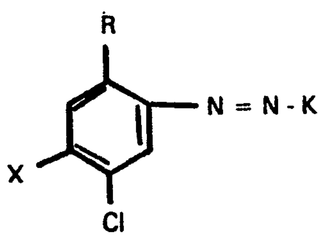

(1)

which has the following meaning:

K is the radical of a water-soluble coupling component capable of coupling once or twice, selected from the series of aminobenzenes, phenols, naphthols, aminonaphthols or acylaminonaphthols (in which the acyl radical is that of an alkanecarboxylic or alkenecarboxylic acid, each of which has 1 to 4 C-atoms in the alkyl or alkenyl radical, or of an aromatic carboxylic acid or an aromatic sulfonic acid or N-substituted carbamic acid) or from the series of dihydroxynaphthalenesulfonic acids, of phenylazo- and naphthylazo-aminonaphtholsulfonic acids, of 5-pyrazolones and 5-aminopyrazoles, of acetoacetylarylides, 2-hydroxy-6-pyridones and hydroxyquinolines;

R is an alkoxy group of from 1 to 4 C-atoms;

X is a radical of the formula (2) or of the general formula (3)

$$-SO_2-CH=CH_2 \qquad (2)$$

$$-SO_2-CH_2-CH_2-Z \qquad (3)$$

in which Z denotes a group which can be eliminated under alkaline conditions.

2. Copper complex compounds of the monoazo or disazo compounds described and defined in claim 1.

3. Disazo compounds according to claim 1 of the general formula (written in the form of the free acid)

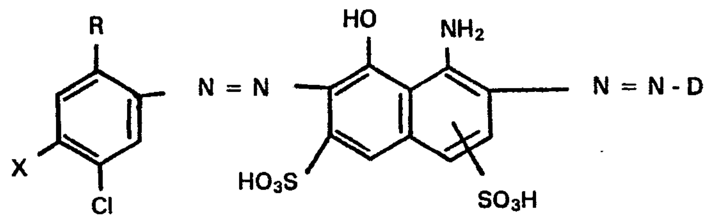

or of the general formula (written in the form of the free acid)

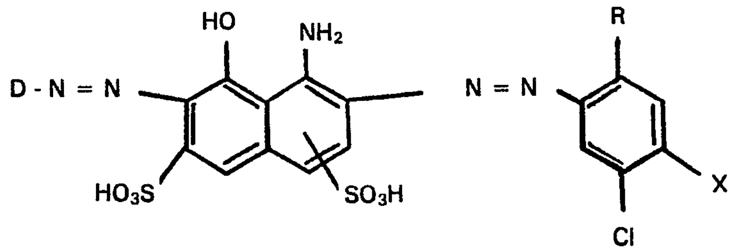

in which R and X has the meanings mentioned in claim 1, and D is the phenyl or naphthyl radical, which may be substituted by 1, 2 or 3 substituents selected from the group of chlorine, bromine, alkyl of 1 to 4 C-Atoms, alkoxy of 1 to 4 C-Atoms, hydroxy, sulfo, carboxy, carbamoyl and sulfamoyl, and which may optionally be substituted by a radical according to the formula member X defined in claim 1.

4. Copper complex compounds according to claim 2 of the formulae (4a), (4b) or (4c)

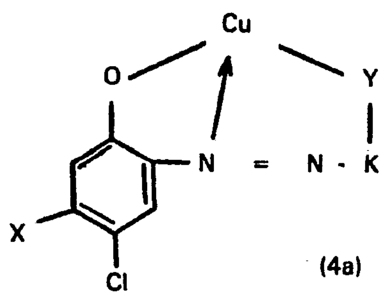

(4a)

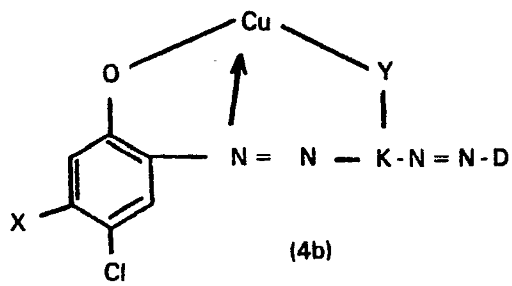

(4b)

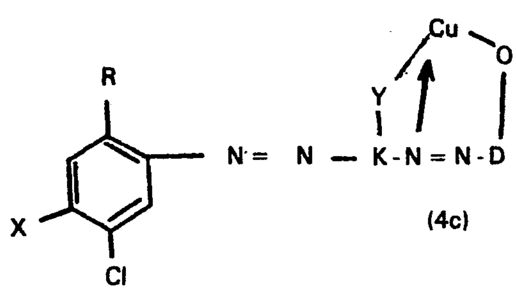

(4c)

in which X and K have the meanings mentioned in claim 1, D is the phenyl or naphthyl radical, which may be substituted by 1,, 2 or 3 substituents selected from the group of chlorine, bromine, alkyl of 1 to 4 C-atoms, alkoxy of 1 to 4 C-atoms, hydroxy, sulfo, carboxy, carbamoyl and sulfamoyl, and which may optionally be substituted by a radical according to the formula member X defined above, and Y represents a radical of the formula -O- or -NH- as a group bindung the copper atom in the complex form.

5. Metal-free monoazo compounds or copper complex monoazo compounds according to claim 1, 2 or 4, characterized in that K is the radical of 1-naphthol or 2-naphthol, which are substituted by 1, 2 or 3 sulfonic acid groups, or is the radical of 1-naphthol or 2-naphthol, which are substituted by 1 or 2 sulfonic acid groups and by one acetylamino, propionylamino, benzoylamino, benzenesulfonylamino or tosylamine group, or is the radical of 1-phenyl-5-pyrazolone which is substituted in the 3-position by the methyl, carbomethoxy, carboethoxy or carboxy group and the phenyl radical of which can be substituted by 1 or 2 substituents of the group of methyl, chlorine and sulfo, and Y in formula (4a) of claim 4 is the oxygen atom.

6. Compounds according to claim 3 or 4, characterized in that D is the phenyl or naphthyl radical, each of which can be substituted by 1, 2 or 3 substituents of the group of chlorine, methyl, methoxy, sulfo and hydroxy, or is the radical of the formula

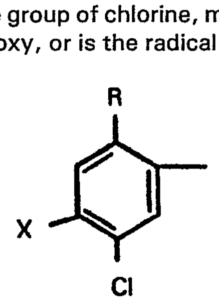

with R and X having the meanings mentioned in claim 1, and K and Y have the meanings mentioned in claim 4.

7. Monoazo compounds of the general formula (1) according to claim 1, characterized in that R is the methoxy group, X is the $\beta$-sulfatoethylsulfonyl or the vinylsulfonyl group and K is the 1-hydroxy-4-sulfonaphth-2-yl-, the 1-hydroxy-3,6-disulfonaphth-2-yl-, the 1-hydroxy-8-acetylamino-3,6-disulfonaphth-2-yl-, the 1-(4'-sulfophenyl)-3-methylpyrazol-5-on-4-yl- or the 1-(4'-sulfophenyl)-3-carboxy-pyrazol-5-on-4-yl group.

8. Disazo compounds according to claim 1 of the formula (written in the form of the free acid)

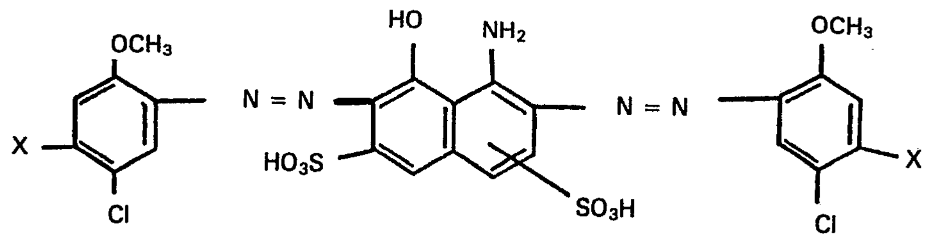

wherein X is the vinylsulfonyl or $\beta$-sulfatoethylsulfonyl group.

9. Process for the manufacture of the compounds of the general formula (1) which are mentioned and defined in claim 1, characterized by that an aromatic amine of the general formula (5)

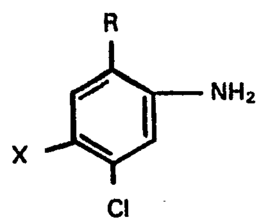

(5)

in wich R and X have the meanings mentioned in claim 1, is diazotized and coupled once or twice onto a coupling component of the general formula (6) or of the general formula (6a)

H - K (6) H - K - H (6a)

in which K has the meanings mentioned in claim 1.

10. Process for the manufacture of disazo compounds of claim 1, characterized by coupling a compound which can be coupled at two points, of the general formula (6a)

H - K - H

in which K has the meaning mentioned in claim 1, first with the diazonium compound of the amine of the general formula (5) or of another aromatic amine of the aniline or naphthylamine series, preferably an amine of the general formula (7)

$D - NH_2$ (7)

in which D has the abovementioned meaning, in an acid medium and then carrying out the second coupling reaction with the second mole of a diazonium compound of an amine of the general formula (5) or an amine of the aniline or naphthylamine series, but necessarily with the diazonium compound of the amine of the general formula (5) if the first coupling reaction was carried out with the diazonium compound of an amine of the aniline or naphthylamine series, in the slightly acid, neutral or slightly alkaline range.

11. Process for the manufacture of the copper complex compounds of claim 2, characterized by that a compound of the general formula (1) mentioned and defined in claim 1, or a compound of the general formula (1) which has been prepared in accordance with claim 8 or claim 9, provided that the coupling component K contains a hydroxy or amino group in the ortho-position relative to the azo group, is reacted under dealkylation with a copper donating agent.

12. Process for the manufacture of the compounds of the general formula (1) or copper complex compounds thereof of claim 1 or 2 in which X is an ethylsulfonyl group which is subsituted in the $\beta$-position by an acid ester or acyloxy group, characterized in that a compound of the general formula (1) or the copper complex compound thereof, in which Z is the $\beta$-hydroxyethylsulfonyl group, is reacted with an esterifying or acylating agent.

13. Process for the manufacture of the compounds of the general formula (1) or copper complex compounds thereof of claim 1 or 2, in which X is the ethylsulfonyl radical which is substituted in the $\beta$-position by a dialkylamino group having 1 to 4 C-atoms in each of the alkyls, or by the thiosulfato group, characterized in that a compound of the general formula (1) or the copper complex compound thereof, in which X is the vinylsulfonyl group, is reacted with a dialkylamine having 1 to 4 C-atoms in each of the alkyl radicals, or with a salt of the thiosulfuric acid, respectively.

14. Use of the compounds of claim 1 or 2 as dyestuffs.

15. Use according to claim 14 for dyeing and printing materials containing hydroxy and carbonamide groups.

**Revendications**

1. Composés monoazoïques et disazoïques hydrosolubles, de formule générale (1)

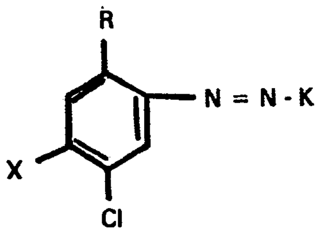

(1)

dans laquelle:

K représente le radical d'un copulant hydrosoluble, pouvant être fixé une ou deux fois par copulation, de la série des aminobenzènes, des phénols, des naphtols, des aminonaphtols, des acylaminonaphtols comportant le radical acyle d'un acide alcane- ou alcène-carboxylique ayant chaque fois 1 à 4 atomes de carbone dans le radical alkyle ou alcényle, ou d'un acide carboxylique aromatique ou d'un acide sulfonique aromatique ou de l'acide carbamique substitué à l'azote ou de la série de l'acide dihydroxynaphtalène sulfonique, des acides phénylazo- et naphtylazo-aminonaphtol sulfoniques, des pyrazolones-5 et des aminopyrazolones-5, des acétoacétylarylides, des hydroxy-2 pyridones-6 et des hydroxyquinoléines;

R représente un groupe alcoxy ayant 1 à 4 atomes de carbone;

X représente un radical de formule (2) ou de formule générale (3)

$-SO_2-CH=CH_2$ (2)

$-SO_2-CH_2-CH_2-Z$ (3)

dans lesquelles Z représente un groupe éliminable par voie alcaline.

2. Composés complexes de cuivre des composés mono- et disazoïques cités et définis à la revendication 1.

3. Composés disazoïques selon la revendication 1, répondant à la formule générale (écrite sous forme de l'acide libre):

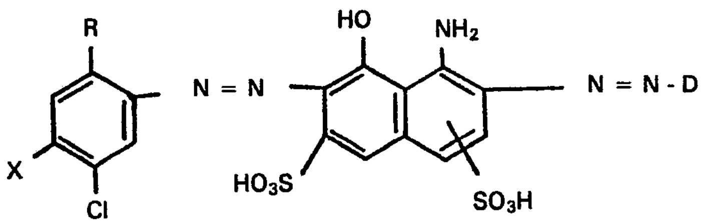

ou de formule générale (écrite sous forme de l'acide libre):

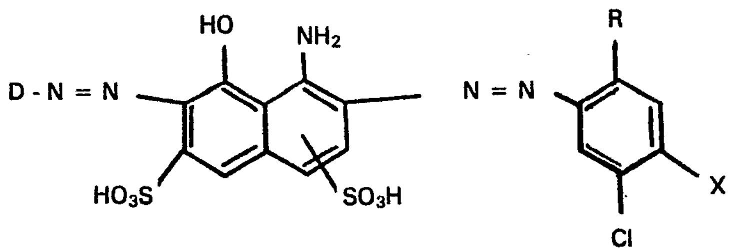

dans lesquelles R et X ont les sens indiqués à la revendication 1 et D représente le radical phényle ou naphthyle, qui peut être substitué par 1, 2 ou 3 substituants choisis dans l'ensemble constitué par un atome de chlore ou de brome, un groupe alkyle ayant 1 à 4 atomes de carbone, alcoxy ayant 1 à 4 atomes de carbone, hydroxyle, sulfo, carboxyle, carbamoyle et sulfamoyle et éventuellement par un radical du terme X défini à la revendication 1.

4. Composés complexes de cuivre selon la revendication 2, répondant aux formules (4a), (4b) ou (4c)

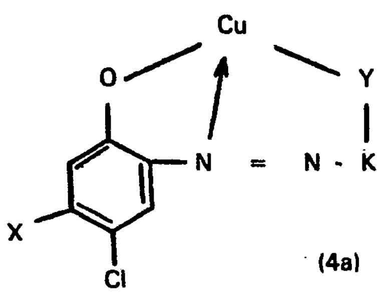

(4a)

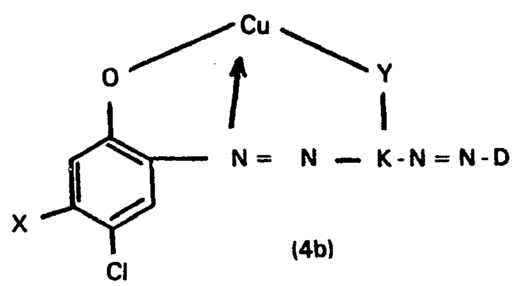

(4b)

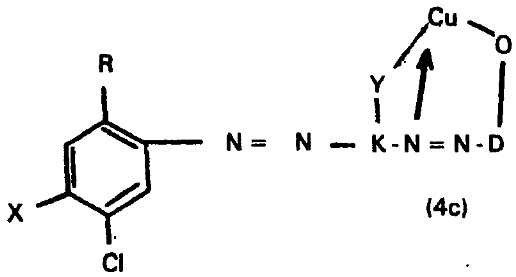

(4c)

dans lesquelles X et K ont les sens indiqués à la revendication 1, D représente le radical phényle ou naphtyle, qui peut être substitué par 1, 2 ou 3 substituants choisis dans l'ensemble constitué par un atome de chlore ou de brome, un groupe alkyle ayant 1 à 4 atomes de carbone, alcoxy ayant 1 à 4 atomes de carbone, hydroxyle, sulfo, carboxy, carbamoyle et sulfamoyle et qui est éventuellement substitué par un radical correspondant au terme X défini ci-dessus, et Y, comme groupe fixant de façon complexe l'atome de cuivre. représente le radical de formule -O- ou -NH-.

5. Composés monoazoïques sans métaux ou composés monoazoïques complexes de cuivre selon l'une quelconque des revendications 1, 2 ou 4, caractérisé en ce que K représente le radical du naphtol-1 ou du naphtol-2, qui sont substitués par 1, 2 ou 3 groupes acides sulfoniques, ou K représente le radical du naphtol-1 ou du naphtol-2, qui sont substitués par 1 ou 2 groupes acides sulfoniques et par un groupe acétylamine, propionylamino, benzoylamino, benzènesulfonylamino ou tosylamino, ou bien K représente le radical de la phényl-1 pyrazolone-5, qui est substitué en position 3 par le groupe méthyle, carbométhoxy, carbéthoxy ou carboxyle et dont le radical phényle peut être substitué par 1 ou 2 substituants choisis parmi un groupe méthyle, chloro et sulfo, le radical Y représentant l'atome d'oxygène dans la formule (4a) de la revendication 4.

6. Composés selon la revendication 3 ou 4, caractérisés en ce que D représente le radical phényle ou naphtyle qui peuvent être substitués par 1, 2 ou 3 substituants choisis dans l'ensemble formé par un atome de chlore et un groupe méthyle, méthoxy, sulfo et hydroxyle, ou bien D représente le radical de formule

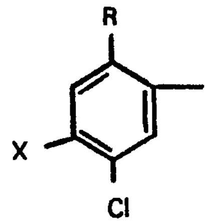

dans laquelle R et X ont le sens indiqué à la revendication 1, et K et Y ont les sens indiqués à la revendication 4.

7. Composés monoazoïques de formule générale (1) selon la revendication 1, caractérisés en ce que R représente le groupe méthoxy, X représente le radical bêta-sulfatoéthylsulfonyle ou vinylsulfonyle, et K le radical hydroxy-1 sulfo-4 naphtyle-2, le radical hydroxy-1 disulfo-3,6 naphtyle-2, le radical hydroxy-1 acétylamino-8 disulfo-3,6 naphtyle-2, le radical (sulfo-4' phényl)-1 méthyl-3 pyrazolone-5 yle-4 ou le radical (sulfo-4' phényl)-1 carboxy-3 pyrazolone-5 yle-4.

8. Composés disazoïques selon la revendication 1, de formule (écrite sous forme de l'acide libre)

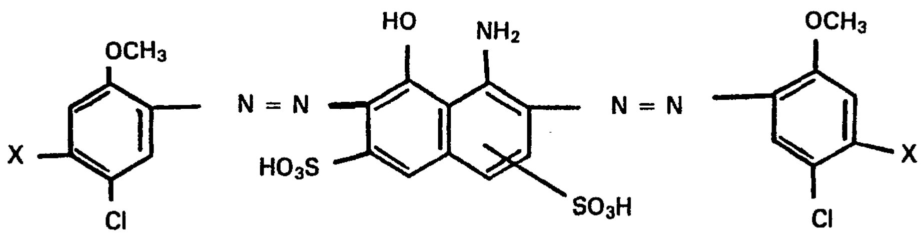

dans laquelle X représente le groupe vinylsulfonyle ou le groupe bêta-sulfatoéthylsulfonyle.

9. Procédé de préparation des composés de formule générale (1), cités et définis à la revendication 1, procédé caractérisé en ce qu'on diazote une amine aromatique de formule générale (5)

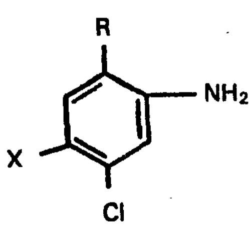

(dans laquelle R et X ont les sens indiqués à la revendication 1) et l'on copule une fois ou deux fois avec un copulant de formule générale (6) ou de formule générale (6a)

H - K (6) H - K - H (6a)

dans lesquelles les symboles K ont les sens indiqués à la revendication 1.

10. Procédé de préparation de composés disazoïques de la revendication 1, caractérisé en ce qu'on copule un composé pouvant copuler deux fois, de formule générale (6a)

H - K - H

(dans laquelle K a le sens indiqué à la revendication 1) tout d'abord avec le composé de diazonium dérivant de l'amine de formule générale (5) ou d'une autre amine aromatique de la série de l'aniline ou de la

naphthylamine, de préférence une amine de formule générale (7)

$$D - NH_2 \qquad (7)$$

(dans laquelle D a le sens précité), tout d'abord en milieu acide puis l'on effectue la seconde réaction de copulation avec la seconde mole d'un composé de diazonium dérivant d'une amine de formule générale (5) ou d'une amine de la série de l'aniline ou de la naphtylamine, mais absolument avec le composé de diazonium dérivant de l'amine de formule générale (5), dans la mesure où la première réaction de copulation a été réalisée avec le composé de diazonium dérivant d'une amine de la série de l'aniline ou de la naphtylamine, en opérant en milieu faiblement acide, neutre ou faiblement alcalin.

11. Procédé de préparation des composés complexes de cuivre de la revendication 2, caractérisé en ce qu'on soumet un composé de formule générale (1), cité et défini à la revendication 1 ou bien un composé de formule générale (1), préparé selon la revendication 8 ou 9, dans la mesure où le copulant K contient un groupe hydroxyle ou amino en ortho du groupe azo, à une réaction de désalkylation avec un agent cédant du cuivre.

12. Procédé de préparation des composés de formule générale (1) ou de leurs composés complexes de cuivre de la revendication 1 ou 2, comportant un radical X qui est un groupe éthylsulfonyle substitué en position bêta par un groupe ester d'acide ou acyloxy, procédé caractérisé en ce qu'on fait réagir un composé de formule générale (1) ou son complexe de cuivre (dans lesquels Z représente le groupe bêta-hydroxyéthylsulfonyle) avec un agent d'estérification ou d'acylation.

13. Procédé de préparation des composés de formule générale (1) ou de leurs complexes de cuivre selon la revendication 1 ou 2, dans lesquels X est le groupe éthylsulfonyle qui est substitué en position bêta par un groupe dialkylamino comportant à chaque fois 1 à 4 atomes de carbone ou par un groupe thiosulfato, procédé caractérisé en ce qu'on fait réagir un composé de formule générale (1) ou son complexe de cuivre, dans lesquels X représente le groupe vinylsulfonyle, avec une dialkylamine comportant des radicaux alkyles ayant chacun 1 à 4 atomes de carbone ou avec un sel de l'acide thiosulfurique.

14. Utilisation des composés de la revendication 1 ou 2 comme colorants.

15. Utilisation selon la revendication 14 pour teindre et imprimer des matières contenant des groupes hydroxyles et carboxamides.